# EUROPÄISCHE PATENTANMELDUNG

(11) **EP 1 359 566 A1**
(43) Veröffentlichungstag der Anmeldung: **05.11.2003**
(21) Anmeldenummer: 03090131.8
(22) Anmeldetag: 29.04.2003
(51) Int. Cl.: G10L 15/10

(54) **Verfahren und Anordnung zur sprachbasierten Nutzung von Speichersystemen sowie ein entsprechendes Computerprogramm und ein entsprechendes computerlesbares Speichermedium**

(30) Priorität: 29.04.2002 WO PCT/EP02/04738; 23.12.2002 EP 02090426
(71) Anmelder: Digital Design GmbH, 10787 Berlin (DE)
(72) Erfinder: Wallers, Joseph, 10787 Berlin (DE)
(74) Vertreter: Hengelhaupt, Jürgen D., Dipl.-Ing.

(57) **Zusammenfassung**

Die Erfindung betrifft ein Verfahren und eine Anordnung zur sprachbasierten Nutzung von digitalen Speichersystemen sowie ein entsprechendes Computerprogramm-Produkt und ein entsprechendes computerlesbares Speichermedium und ist insbesondere einsetzbar für das Wiederfinden von Daten wie beispielsweise (digital) aufgezeichneten Sprachnotizen, abgespeicherten Bildern oder ganz allgemein von Informationen und Kontexten, welche strukturiert oder unstrukturiert in Speichersystemen abgelegt sind.

## Beschreibung

Die Erfindung betrifft ein Verfahren und eine Anordnung zur sprachbasierten Nutzung von Speichersystemen sowie ein entsprechendes Computerprogramm und ein entsprechendes computerlesbares Speichermedium und ist insbesondere einsetzbar für das Wiederfinden von Daten wie beispielsweise (digital) aufgezeichneten Sprachnotizen, abgespeicherten Bildern oder ganz allgemein von Informationen und Kontexten, welche strukturiert oder unstrukturiert in Speichersystemen abgelegt sind.

Es sind bereits Verfahren und Vorrichtungen bekannt, mit denen es möglich ist, Sprachinformationen abzuspeichern, wobei die abgespeicherten Sprachinformationen mit Digital-Kennzeichnungssignalworten versehen werden, um das Auffinden bestimmter Sprachinformationen zur Wiedergabe oder zur Übertragung zu erleichtern.

In der Offenlegungsschrift DE 33 33 958 A1 ist eine Vorrichtung zum Abspeichern von Sprachinformationen beschrieben, die einen steuerbaren Generator enthält, durch welchen mittels Tastatur Digital-Kennungssignalworte erzeugt werden. Diese werden mit oder getrennt von den Sprachinformationen aufgezeichnet und beim späteren Suchen zum Auffinden der gesuchten Information verwendet.
Nachteilig ist es, dass der Benutzer die Sprachinformationen klassifizieren muss, um einen Suchvorgang nach bestimmten Sprachinformationen starten zu können.

In der US 5,602,963 wird ein elektronischer Personal Organizer beschrieben, welcher Sprachnotizen aufzeichnen und wiedergeben kann. Der Organizer weist auch eine Funktion auf, welche es dem Benutzer ermöglicht, nach dem Aufzeichnen einer Sprachnotiz, diese durch Eingabe eines oder mehrerer gesprochener Worte zum späteren Wiederauffinden zu markieren.

Diese Vorgehensweise hat den Nachteil, dass für jede Notiz, sofern eine Klassifikation erwünscht ist, die Klassifikation vom Benutzer explizit nach dem Aufzeichnen der Notiz vorgenommen werden muss. Die Menge der Worte, nach denen gesucht werden kann, muss vorher festgelegt werden. Diese Worte müssen vorher in einer Trainingsphase vorgesprochen werden. Die Verarbeitung der Sprachsignale im Organizer erfolgt durch unterschiedliche Verarbeitungsfunktionen, je nachdem, ob die Sprache aufgezeichnet oder mit vorgezeichnetem Wortschatz verglichen werden soll.

In der US 6,041,300 werden ein Verfahren und eine Vorrichtung beschrieben, nach denen zur Verbesserung der Sprachwahl die Sprache in eine Folge von "Lefeme'n" abzubilden ist, die mit zuvor abgespeicherten "Lefeme-Folgen" verglichen werden. Das erkannte Wort wird zur Bestätigung durch den Benutzer aus der in der Datenbank abgespeicherten Folge von "Lefeme'n" synthetisiert und ausgegeben.

Nachteilig ist dabei insbesondere, dass als erster Schritt der Aufbau einer zusätzlichen (waveform) Datenbank mit Informationen über die "Lefeme"-Darstellung notwendig ist.

In der Europäischen Patentschrift EP 1 056 265 A2 wird ein Suchsystem für Nachrichten in einem Anrufbeantworter beschrieben. Zum Auffinden der Nachrichten werden Spracherkennungs-Techniken ("voice recognition techniques") verwendet, die notwendigerweise sprecherunabhängig funktionieren müssen.

Als Nachteil für die Suche in Sprachnotizen erweist sich allerdings, daß diese Spracherkennungs-Techniken, sofern sie ein größeres Vokabular als einige hundert Worte umfassen, einen wesentlichen Teil ihrer Erkennungsleistungen aus statistischen Modellen von Wortfolgen erzielen. Dadurch sind sie stark sprachabhängig. Für die Eingabe von einzelnen Suchstichworten, die nicht in die Wortfolge eines Satzes eingebettet sind, sind solche statistischen Modelle jedoch nicht einsetzbar. Darüber hinaus ist es nachteilig, daß diese Spracherkennungs-Techniken in der Regel auf einem vorgegebenen Vokabular arbeiten und viel Speicherplatz und Rechenaufwand erfordern.

Die Europäische Patentschrift EP 0 938 053 A1 beschreibt ein Verfahren, mit dem die Trefferlisten von Internet-Suchmaschinen verbessert werden können, indem eine Verfeinerung von Deskriptoren erfolgt, mit deren Hilfe Daten wiedergefunden werden.

Nachteilig an diesem Verfahren ist allerdings, daß die Daten in zwei verschiedenen Formen - als Zusammenfassung und als vollständige Fassung - bereitgehalten werden müssen.

Die US-Patentschrift US 5,842,161 wird ein Telekommunikations-Instrument zur Spracherkennung beschrieben, welches die zur Spracherkennung verwendeten Sprach-Modelle jeweils an den Sprecher anpasst.
L. Wilcox et al.: "Wordspotting for Voice Editing and Audio Indexing" beschreibt ein Verfahren zum Auffinden von Schlüsselwörtern innerhalb von Fließtext. Allerdings weist dieses Verfahren insbesondere den Nachteil auf, daß das System von dem Nutzer trainiert werden muß.

Aufgabe der Erfindung ist es, ein gattungsgemäßes Verfahren und eine gattungsgemäße Anordnung zur sprachbasierten Nutzung von Speichersystemen sowie ein entsprechendes Computerprogramm-Produkt und ein entsprechendes computerlesbares Speichermedium zu entwickeln, mit denen die Nachteile des Standes der Technik vermieden werden, und mit denen ein auf Sprache gestütztes Speichersystem bereitgestellt wird und mit denen ein Suchen bzw. Wiedergeben von Sprachinformationen oder anderer in einem Speichersystem abgelegten Daten anhand von vorgesprochenen Stichworten ermöglicht wird, ohne vorher notwendigerweise eine manuelle Kennzeichnung oder Klassifizierung vornehmen zu müssen und ohne die Vorgabe eines Wortschatzes.

Erfindungsgemäß wird diese Aufgabe durch die Merkmale der Ansprüche 1, 21, 27 und 28 gelöst.

Ein besonderer Vorteil des Verfahrens zur sprachlichen Nutzung von digitalen Speichersystemen besteht darin, dass es zur Suche in unstrukturiert abgespeicherten Datenmengen einsetzbar ist, indem in dem (den) Speichersystem(en) abgelegte Daten gespeicherte Sprachsignale (Stichworte) umfassen und/oder mit mindestens einem gespeicherten Stichwort verknüpft werden, und ein Zugriff auf in dem (den) Speichersystem(en) abgelegte Daten derart erfolgt, daß über Eingabemittel für Daten und/oder Signale einem Mittel zur Daten- und/oder Signalverarbeitung zugeführte Sprachsignale (Suchanfrage) automatisch mit wenigstens einem Teil der Stichworte verglichen und bewertet wird, in Abhängigkeit von der Bewertung eines Stichwortes dieses Stichwort enthaltende, in dem (den) Speichersystem(en) abgelegte Daten oder mit diesem Stichwort verknüpfte, in dem (den) Speichersystem(en) abgelegte Daten ausgegeben und/oder verfügbar gemacht und/oder durch diese Daten gesteuerte Prozesse gestartet werden. Bei den in dem (den) Speichersystem(en) abgelegten, ein Stichwort enthaltenden Daten kann es sich beispielsweise um Sprachnotizen oder Textdateien handeln, während mit einem Stichwort verknüpfte, in dem (den) Speichersystem(en) abgelegte Daten beispielsweise Bild- oder Musikdateien sein können, die selbst keine Stichworte enthalten.

In einer bevorzugten Ausführungsform des erfindungsgemäßen Verfahrens ist vorgesehen, daß die Verknüpfung der gespeicherten Stichworte mit den in dem (den) Speichersystem(en) abgelegten Daten durch Zeiger (pointer) realisiert wird, welche von dem Stichwort auf in dem (den) Speichersystem(en) abgelegte Daten verweisen.

In einer anderen bevorzugten Ausführungsform ist vorgesehen, daß in Abhängigkeit der Bewertung und/oder der Ergebnisse des Vergleichs und/oder in Abhängigkeit von Benutzerreaktionen und/oder von Rückfragen Cluster gebildet werden, indem einem Stichwort wenigstens Teile von Suchanfragen und/oder Suchergebnissen zugeordnet werden, und/oder Cluster von Artefakten gebildet werden, und bei erneuter Suche zusammen mit einem Stichwort wenigstens ein Teil des diesem Stichwort zugeordneten Clusters verglichen und bewertet wird.

Das erfindungsgemäße Verfahren lässt sich besonders vorteilhaft ausführen, wenn Vergleich und/oder Bewertung auf einem Mittel zur Daten- und/oder Signalverarbeitung umfassenden Speicherelement, wie beispielsweise einem Flash-Speicherelement, ausgeführt wird. Durch dieses Vorgehen wird die Suche nach Stichworten bzw. gespeicherten Daten insbesondere bei Schnittstellen mit geringer Bandbreite, wie es bei seriellen Schnittstellen von MultiMediaCard oder Memory Stick der Fall ist, beschleunigt, da hierbei nur geringe Datenmengen über die Schnittstelle übertragen werden. Das auf dem Speicherelement befindliche Mittel zur Daten- und/oder Signalverarbeitung (Chip oder Prozessor) kann auch zum Schutz gegen unberechtigten Zugriff auf die Speicherkarte genutzt werden, indem auf dem Speicherelement ein Zugangsschutz implementiert ist.

In einer weiteren bevorzugten Ausführungsform ist vorgesehen, daß ein Vergleich von Sprachsignalen einer Suchanfrage mit wenigstens einem Teil der Stichworte mittels eines Verfahrens zur Mustererkennung erfolgt.

In einem bewährten Mustererkennungserfahren werden die digitalisierten Sprachsignale in Zeitsegmente unterteilt. Die Länge der Segmente liegt gewöhnlich in einem Bereich von 5 bis 30 ms. Typische Werte sind 10 oder 20 ms. Mit einschlägigen Algorithmen zur Merkmalsextraktion werden auf Basis dieser Segmente Merkmale wie geglättete oder ungeglättete Spektralenergieverteilung, Autkorrelationskoeffizienten, LPC-Koeffizienten (Linear Predictiv Coding) und Transformationen davon, wie z. B. LSP (Line Spectrum Pairs), LSF (Line Sprectrum Frequencies), PARCOR-Koeffizienten, LAR- (Log. Area Ratio) Koeffizienten oder Cepstrum-Koeffizienten oder vergleichbare Parameter berechnet. Es hat sich als vorteilhaft erwiesen, mit Hilfe von Mel, Bark oder ähnlichen Transformationen die Parameter den Eigenschaften des menschlichen Gehörs anzupassen. Der Vergleich der beiden Muster wird dann mittels einer Zeitanpassung (DTW Dynamic Time Warping) vollzogen. Bevorzugt werden für einen Mustervergleich "Dynamische Programmierung" oder Markov-Modelle oder künstliche 'Neuronale Netze' oder Kombinationen dieser Verfahren verwendet

Die Bewertung eines Stichwortes erfolgt vorteilhafterweise, indem ein Abstandswert zwischen den verglichenen Sprachsignalen ermittelt wird.

Eine weitere bevorzugte Ausführungsform der Erfindung zeichnet sich dadurch aus, daß die in dem (den) Speichersystem(en) abgelegte Daten in Form von
- ASCII und/oder UCS-Dateien (UCS = Universal Coding System),
- E-Books,
- Dateien mit Musikaufzeichnungen,
- als Dia-Sammlungen oder Video-Daten abgespeicherte Bilddaten
vorliegen und
- Lesezeichen in E-Books gesetzt,
- sprachlich Bookmarks beim Surfen im Internet gesetzt,
- Markierungen von Sammlungen von Musikstücken als Markierung eines Musikstückes oder als Markierung einer Stelle innerhalb eines Musikstückes eingefügt,
- Markierungen von Video-Sammlungen als Markierung von einzelnen Video-Filmen oder als Markierung von Stellen innerhalb eines Films gesetzt,
- Markierungen von Dia-Sammlungen eingefügt oder
- Markierungen von gespeicherten Bild-Dateien vorgenommen werden.

Es ist ebenfalls vorteilhaft, wenn weitere Informationen wie Sprachmuster der in den Suchbefehlen enthaltenen Stichworte, wie Zeiger auf die gefundenen Sprachnotizen, wie berechnete Abstandswerte und wie Reaktionen und/oder Bewertungen des Benutzers gespeichert werden und/oder bei späteren Suchvorgängen die Sprachmuster der früheren Suchbefehle unter Berücksichtigung der aufgezeichneten Bewertungen und/oder Benutzerreaktionen und/oder Abstandswerten und/oder Zeiger durchsucht werden.

Als vorteilhaft erweist es sich weiterhin, wenn zusammen mit aufgezeichneten Stichworten automatisch Zeit und Ort einer Aufzeichnung oder weitere Daten wie Aufnahmegerät, Konfiguration/ Einstellungen des Aufnahmegerätes, Datenformat, Lichtverhältnisse gespeichert werden.

Darüber hinaus stellt es einen Vorteil dar, wenn zur Angabe eines Ortes Daten aus einem satellitengestütztem Ortsbestimmungssystem wie GPS (Global Positioning System) oder Daten der netzbasierten Ortsbestimmung von Telekommunikationsdiensten verwendet werden.

Ebenso ist es von Vorteil, wenn Stichworte und/oder zusätzliche, bei einer Suche benutzte Informationen editierbar abgespeichert sind und das Editieren wenigstens das Hinzufügen und/oder Löschen von Stichworten und/oder zusätzlicher Informationen und/oder die Erzeugung neuer Kategorien und/ oder das Beheben von Fehlern in der Kategorisierung umfasst.
In einer weiteren bevorzugten Ausführungsform des erfindungsgemäßen Verfahrens ist vorgesehen, daß die Fundstellen mit der höchsten Trefferwahrscheinlichkeit zuerst wiedergegeben werden, wobei die Trefferwahrscheinlichkeit anhand
- der Anzahl der gesuchten und/oder gefundenen Stichworte und/oder
- der je Stichwort berechneten Abstandswerte ("Ähnlichkeit") und/oder
- der zeitlichen Reihenfolge der Aufzeichnung der Fundstellen (most recent first) und/oder
- der Häufigkeit der Abfrage der Fundstellen (Beliebtheitsgrad) und/oder
- anhand einer automatischen Rückfrage ermittelt wird.
   Von Vorteil ist dabei, wenn die automatische Rückfrage
- stichwortbasiert erfolgt und in den Fundstellen enthaltene oder mit den Fundstellen verknüpfte Stichworte, welche aber nicht in der Suchanfrage enthalten sind, zur Auswahl stellt und/oder
- auf Ortskoordinaten basiert und zur Eingrenzung der Fundstellen in den Fundstellen enthaltene oder mit den Fundstellen verknüpfte Orte vorschlägt und/oder
- auf Zeitangaben basiert und zur Eingrenzung der Fundstellen in den Fundstellen enthaltene oder mit den Fundstellen verknüpfte Zeitangaben vorschlägt.

Darüber hinaus ist es vorteilhaft, wenn die Rückfrage zur Eingrenzung der Fundstellen folgende Optionen anbietet:
- Rückfragekriterium wie Stichwort, Orts- und/ oder Zeitangabe ignorieren,
- Fundstellen, auf die das Rückfragekriterium verweist, verwerfen und/oder
- Fundstellen, auf die das Rückfragekriterium verweist, in nachfolgenden Verfahrensschritten weiterhin berücksichtigen.

In einer weiteren Ausführung der Erfindung erfolgt die Rückfrage akustisch oder auf einem Display.

Es muss keine explizite Zuordnung der Sprachnotizen zu bestimmten Worten durch den Benutzer erfolgen, der Wortschatz bzw. die Kategorien müssen nicht explizit vorgegeben werden. Es wird keine Trainingsphase benötigt.

Eine Anordnung zur sprachbasierten Nutzung von Speichersystemen ist vorteilhafterweise dadurch ausgezeichnet, daß sie neben Ein- und -ausgabemitteln für Daten und/oder Signale, Mitteln zur Aufzeichnung und/oder Wiedergabe von Daten und/oder Signalen und Mitteln zur Daten- und/oder Signalverarbeitung mindestens einen Prozessor und/oder Chip umfaßt, der (die) derart eingerichtet ist (sind), daß eine sprachbasierte Nutzung von Speichersystemen durchführbar ist, wobei in dem in dem (den) Speichersystem(en) abgelegte Daten gespeicherte Sprachsignale (Stichworte) umfassen und/oder mit mindestens einem gespeicherten Stichwort verknüpft werden, und ein Zugriff auf in dem (den) Speichersystem(en) abgelegte Daten derart erfolgt, daß über Eingabemittel für Daten und/oder Signale einem Mittel zur Daten- und/oder Signalverarbeitung zugeführte Sprachsignale (Suchanfrage) automatisch mit wenigstens einem Teil der Stichworte verglichen und bewertet wird, in Abhängigkeit von der Bewertung eines Stichwortes dieses Stichwort enthaltende, in dem (den) Speichersystem(en) abgelegte Daten oder mit diesem Stichwort verknüpfte, in dem (den) Speichersystem(en) abgelegte Daten ausgegeben und/oder verfügbar gemacht und/oder durch diese Daten gesteuerte Prozesse gestartet werden.

In einer bevorzugten Ausführungsform der erfindungsgemäßen Anordnung ist vorgesehen, dass ein Telekommunikationsendgerät wie ein Handy/ Telefon 10 mit einem Speichermedium wie FlashROM und/oder Speicherkarte 12 und/oder eine Datenverarbeitungseinrichtung wie PC, Server mit einer speziellen Zusatzsoftware 11 ausgestattet verwendet werden. Besonders vorteilhaft lässt sich diese Ausführungsform einsetzen, wenn die Speicherkarte 12 zusätzlich zu dem Speicher für die Indexdateien und/oder die Sprachnotizen einen Suchprozessor und/oder Einrichtungen zum Zugangsschutz enthält.

Andere bevorzugte Ausführungsformen der erfindungsgemäßen Anordnung sind dadurch ausgezeichnet, dass eine spezielle Software auf einem Rechner 14 wie PC mit Spracheingabe und Sprachausgabe oder auf einem über ein Netz mit einem Telefon oder Handy verbundenen Rechner wie PC oder Server verwendet wird.

Von besonderem Vorteil erweist es sich, wenn die Anordnung Mittel zum Anschluß an konventionelle Spracherkennungsmittel aufweist. Damit wird die Möglichkeit gegeben, Stichworte auch textbasiert suchen oder z. B. bei Nachfragen zwecks Eingrenzung der Fundstellen an einem Display ausgeben zu können. Dabei kann es sich auch als günstig erweisen, daß die konventionelle Spracherkennung off-line erfolgt.

Ein Computerprogramm zur sprachbasierten Nutzung von Speichersystemen ermöglicht es einem Computer, nachdem es in den Speicher des Computers geladen worden ist, ein Verfahren zur sprachbasierten Nutzung von Speichersystemen durchzuführen, wobei in dem (den) Speichersystem(en) abgelegte Daten gespeicherte Sprachsignale (Stichworte) umfassen und/oder mit mindestens einem gespeicherten Stichwort verknüpft werden, und ein Zugriff auf in dem (den) Speichersystem(en) abgelegte Daten derart erfolgt, daß über Eingabemittel für Daten und/oder Signale einem Mittel zur Daten- und/oder Signalverarbeitung zugeführte Sprachsignale (Suchanfrage) automatisch mit wenigstens einem Teil der Stichworte verglichen und bewertet wird, in Abhängigkeit von der Bewertung eines Stichwortes dieses Stichwort enthaltende, in dem (den) Speichersystem(en) abgelegte Daten oder mit diesem Stichwort verknüpfte, in dem (den) Speichersystem(en) abgelegte Daten ausgegeben und/oder verfügbar gemacht und/oder durch diese Daten gesteuerte Prozesse gestartet werden.

Beispielsweise können solche Computerprogramme (gegen Gebühr oder unentgeltlich, frei zugänglich oder passwortgeschützt) downloadbar in einem Daten- oder Kommunikationsnetz bereitgestellt werden. Die so bereitgestellten Computerprogrammprodukte bzw. Computerprogramme können dann durch ein Verfahren nutzbar gemacht werden, bei dem ein Computerprogramm nach Anspruch 27 aus einem Netz zur Datenübertragung wie beispielsweise aus dem Internet auf eine an das Netz angeschlossene Datenverarbeitungseinrichtung heruntergeladen wird.

Um eine sprachbasierte Nutzung von Speichersystemen durchzuführen, wird vorteilhafterweise ein computerlesbares Speichermedium eingesetzt, auf dem ein Programm gespeichert ist, das es einem Computer ermöglicht, nachdem es in den Speicher des Computers geladen worden ist, ein Verfahren zur sprachbasierten Nutzung von Speichersystemen durchzuführen, wobei in dem (den) Speichersystem(en) abgelegte Daten gespeicherte Sprachsignale (Stichworte) umfassen und/oder mit mindestens einem gespeicherten Stichwort verknüpft werden, und ein Zugriff auf in dem (den) Speichersystem(en) abgelegte Daten derart erfolgt, daß über Eingabemittel für Daten und/oder Signale einem Mittel zur Daten- und/oder Signalverarbeitung zugeführte Sprachsignale (Suchanfrage) automatisch mit wenigstens einem Teil der Stichworte verglichen und bewertet wird, in Abhängigkeit von der Bewertung eines Stichwortes dieses Stichwort enthaltende, in dem (den) Speichersystem(en) abgelegte Daten oder mit diesem Stichwort verknüpfte, in dem (den) Speichersystem(en) abgelegte Daten ausgegeben und/oder verfügbar gemacht und/oder durch diese Daten gesteuerte Prozesse gestartet werden.

Zur Optimierung der Suche in umfangreichen Speichersystemen werden in einer bevorzugten Ausführungsform der Erfindung Indexdateien wie Tabellen oder Cluster oder Verzeichnisse von Verweisen, Zeigern, Links, Bookmarks, Inhaltsverzeichnissen o. ä., welche durch ein Verfahren gemäß einem der Ansprüche 1 bis 20 erzeugt wurden.

Durch die Erfindung werden ein Verfahren und eine entsprechende Anordnung sowie Computerprogramm-Produkte und ein computerlesbares Speichermedium bereitgestellt, welche die Suche in akustischen, gegebenenfalls komprimiert gespeicherten Aufzeichnungen von Stichworten oder auch anderen Aufzeichnungen wie z. B. Ort- und/oder Zeitangaben ermöglichen, wobei die Aufzeichnungen - im Gegensatz zu dem Aufbau von konventionellen Datenbanken - unstrukturiert vorliegen können. Das Ergebnis der Suche ist ein Verweis (Referenz), welcher in einer bevorzugten Ausführung der Erfindung als Zeiger auf Daten, Informationen und/oder Gegenständen ausgegeben wird, beispielsweise als URI (= Uniform Resource Indicator), als URL(= Universal Resource Locator) oder als Zeiger (pointer) auf eine Datei mit oder auch ohne Zeiger auf Daten innerhalb der Datei.

Eine weitere spezielle Ausführungsform der Erfindung realisiert das Abspeichern und Wiederfinden von Verweisen (Zeigern) Zᵢ auf Informationen und/oder Gegenstände. Zu den Verweisen Zᵢ gehören Aufzeichnungen von gesprochenen Stichworten oder Sätzen (Phrasen), genauer, zu jedem Verweis gehört eine Menge von Stichworten/Phrasen (bᵢ). Zum Wiederfinden werden Stichworte oder Phrasen (aⱼ) vorgesprochen. Diese Stichworte oder Phrasen (aᵢ) werden in den akustischen Aufzeichnungen (bᵢ) gesucht. Wenn die Stichworte/Phrasen (aᵢ) gefunden werden, wird der Zeiger (Verweis) zu den zugehörigen Informationen und/oder Gegenständen zur weiteren Verwendung ausgegeben. Anstelle eines Zeigers auf eine Information kann die Vorrichtung auch die Information ausgeben. Beispiele für solche Verweise sind ein URL auf eine Web-Seite, allgemeiner ein URI oder der Name einer Datei, welche z. B. ein digitales Bild enthält. Ein Verweis kann aber auch die Adresse einer Behörde oder der Name einer Bücherei mitsamt der Signatur des gesuchten Buches sein. Das Erzeugen von Verweisen wird in der Regel implizit erfolgen, beispielsweise indem der Benutzer bei der Aufnahme und dem Abspeichern eines Bildes einige Stichpunkte zum Bild vorspricht, welche dann automatisch zusammen mit einem Zeiger auf die neue Bild-Datei gespeichert werden.

Die Grundfunktionen des Verfahrens und der Vorrichtung gemäß dieser Erfindung können durch zwei Vorgänge beschrieben werden: Aufzeichnen und Suchen/Wiedergeben.

In einer Ausführungsform werden Notizen in Form von einzelnen, gesprochenen Stichworten, z. B. Begriffe, Namen, Nummern oder zusammenhängende Sätze aufgezeichnet. Stichworte, deren sicheres Wiederfinden für den Benutzer besonders wichtig ist, kann er mehrfach innerhalb einer Notiz sprechen. In einer bevorzugten Ausführung werden die Stichworte am Anfang der Notiz gesprochen und am Ende der Notiz nochmals wiederholt. Die Aufzeichnung kann sowohl in der Vorrichtung (Gerät), z. B. auf einer in einem Handy eingebauten Speicherkarte, als auch mittels Sprach/Datenübertragung auf einem entfernten Gerät, z. B. einem Server oder einem PC, erfolgen.

Als Markierungen können neben den aufgesprochenen Stichworten, je nach Anwendung, automatisch Zeit und Ort (Ort durch Empfang von GPS (= Global Positioning System = Satelliten-basierte Ortsbestimmung) oder bei Handys, aufgrund der Daten von netzbasierter Ortsbestimmung (Kennzeichnen der Basisstation, usw.)), eventuell andere Umgebungsdaten wie Helligkeit (Tag/Nacht) gespeichert werden.

Das Verfahren kann dabei nicht nur zum Wiederfinden von Sprachnotizen oder von Bildern, sondern allgemein von Informationen und Kontexten eingesetzt werden. So können z. B.
- Lesezeichen in E-Books gesetzt,
- sprachlich Bookmarks beim Surfen im Internet gesetzt,
- Markierungen von Muiskstücken-Sammlungen (sowohl zum Wiederfinden eines Musikstückes, als auch zum Finden einer Stelle innerhalb eines Musikstückes) eingefügt,
- Markierungen von Video-Sammlungen (auch zur Markierung von Stellen innerhalb eines Films) gesetzt,
- Markierungen von Dia-Sammlungen eingefügt,
- Markierungen von Bildern vorgenommen,
- Telefonnummern zu der Notiz in digitaler Form (im Gegensatz zu gesprochener Form) gespeichert werden (Eingabe kann mittels Sprache, mittels Tasten, oder automatisch durch Aufzeichnung der Telefonnummer des vorherigen/gerade-bestehenden Telfonverbindung),
- Ortsnamen und/oder Ortskoordinaten gespeichert,
- Sender mit Senderfrequenz, Name oder sonstiger Kennzeichnung in digitaler Form zu Stichworten oder Notizen gespeichert werden.

Gesucht wird primär anhand von vorgesprochenen Stichworten. Zum Suchen spricht der Benutzer die gesuchten Stichworte, Namen usw. vor. In der Vorrichtung (z. B. Handy) oder in dem anderen, entfernten Gerät (Server oder PC) werden die vorgesprochenen Sprachmuster mit den abgespeicherten Sprachinformationen verglichen und hinsichtlich ihrer Ähnlichkeit bewertet bzw. es wird ein Abstandswert zwischen den beiden Sprachmustern ermittelt. Die Notizen (Fundstellen), welche Worte mit der größten Ähnlichkeit (geringstem Abstandswert) enthalten, werden dann (in einer Ausführungsform) akustisch wiedergegeben. Bei mehreren Fundstellen kann die Wiedergabe in der Reihenfolge der Aufzeichnung (z. B. letzte Aufzeichnungen zuerst - most recent first) oder nach der Ähnlichkeit von gesuchtem Sprachmuster und gespeicherten Sprachinformationen erfolgen. Suchbefehle können ein oder mehrere Stichworte enthalten. Bei mehreren Stichworten kann die Suche nach Notizen, welche eines der Stichworte, mehrere oder alle enthalten, erfolgen.

In einer bevorzugten Ausführung werden die Fundstellen zuerst wiedergegeben, welche die höchste Anzahl der gesuchten Stichworte enthalten. In einer weiteren bevorzugten Ausführungsform werden die Stichworte in umgekehrter Reihenfolge ihrer Aufzeichnung durchsucht: die zuletzt gesprochenen zuerst.
Ergeben sich bei einer Suche viele Fundstellen, kann das System (Server, Kamera, Handy) beim Benutzer nachfragen und dadurch eine Eingrenzung der Fundstellen ermöglichen. Dazu verwendet es die im Kontext gefundenen Stichworte oder die Zusatzinformationen wie Zeit und/ oder Ort. Die Rückfrage kann sprachlich (entweder durch Wiedergeben von zu den Fundstellen aufgezeichneten Stichworten oder durch Ausgabe von mit den Stichworten aufgezeichneten Daten (Ortsangaben, Zeitangaben) mittels TTS (text to speech Systemen) oder auf einem Display (Ausgabe von Ort, Zeit oder sonstigen aufgezeichneten Kontextinformationen) erfolgen.

Da es teuer und/oder zeitaufwendig sein kann, wenn alle Fundstellen wiedergegeben werden (etwa bei Übertragung von vielen Bildern bei Mobilfunk), ist es sinnvoll, Verfahren zur weiteren Eingrenzung der Fundstellen zu verwenden.

Diese Eingrenzung kann beispielsweise durch das folgende Rückfrageverfahren realisiert werden, das auf dem Grundgedanken basiert, die Fundstellen mit der höchsten Trefferwahrscheinlichkeit zuerst zu übertragen und die Wiedergabe/Übertragung bei Eintreffen der gesuchten Information abzubrechen. Als eine zusätzliche Strategie kann sich die Wiedergabe in der Reihenfolge der Häufigkeit der Abfrage der einzelnen Fundstellen (Beliebtheitsgrad) als nützlich erweisen.

Die abgespeicherten Ortskoordinaten (GPS) erlauben eine Rückfrage mit Angabe der Koordinaten oder durch Nachsuchen einer Ortsbezeichnung in einer Datenbank (Koordinaten -> Ortsnamen) mit Ortsnamen.

Ein Rückfrageverfahren kann beispielsweise in folgenden Schritten ablaufen:
1. Auf den gespeicherten Stichworten basierende Rückfrage: Werden mehrere Fundstellen aufgrund der Suchbegriffe gefunden, so werden die restlichen Stichworte der Fundstellen untersucht. Wenn sie Stichworte enthalten, welche nicht zu den Suchworten (des Suchbefehls) gehören und in nur einem Teil der Fundstellen stehen, wird der Benutzer gefragt, ob er seine Suche auf die Fundstellen eingrenzt, die besagte Stichworte enthalten oder nicht enthalten. Dabei können etwa die drei folgenden Optionen angeboten werden:
   - Stichpunkt ignorieren, da nicht relevant;
   - Fundstellen, welche das Stichwort enthalten, verwerfen;
   - Fundstellen, welche das/die Stichwort/e enthalten, in die engere Wahl nehmen.
2. Auf den Ortskoordinaten basierende Rückfrage:
   Sind die Fundstellen mit unterschiedlichen Ortskoordinaten versehen (Bilder wurden z. B an unterschiedlichen
   Orten aufgenommen), schlägt das System eine Ergänzung nach Orten vor, etwa ebenfalls mit den drei Optionen, wie bei der stichwortbasierten Rückfrage.
3. Auf den zu den Fundstellen vermerkten Zeiten basierende Rückfrage:
   Hier wird analog zu den beiden vorherigen Punkten vorgegangen. Die Reihenfolge der Zeitabfragen nach dem Gesichtspunkt optimaler Eingrenzungsmöglichkeit kann beispielsweise folgendermaßen gewählt sein: Frage nach Tag/Nacht, Vor-/Nachmittag, Jahreszeit, vor/nach Jahreszahl, usw.
4. Für Rückfragen können Kombinationen der drei vorausstehenden Rückfragevarianten zweckmäßig sein.
5. Die Reduktion der Anzahl der Fundstellen kann dadurch beschleunigt werden, dass die Abfragen in einer günstigen Reihenfolge erfolgen:
   Zuerst sollte dabei ein Kriterium abgefragt werden, welches (wenn es eine JA/NEIN/nicht relevant Frage ist) die Fundstellen in zwei möglichst gleichgroße Klassen unterteilt, anschließend ein Kriterium, welches die restlichen Fundstellen wiederum in zwei möglichst gleichgroße Klassen unterteilt, usw. Wenn die Nachfrage mehrere Optionen zulässt (beispielsweise mehrere Orte/Länder als Auswahl in einer Liste/Menü auf einem Display), sollten die Auswahlmöglichkeiten auch hier möglichst Klassen mit gleichgroßer Anzahl von Fundstellen verwenden (z. B. eine Unterteilung in Berlin-Mitte oder München oder Hessen oder Frankreich oder Rest der Welt, wenn je ca. 1/5 auf Berlin-Mitte, Hessen, usw. entfällt). Die für eine zielbasierte Rückfrage unter Punkt drei angeführten Entscheidungen stellen ein weiteres Beispiel für solche Klasseneinteilungen der Fundstellen dar.

Des weiteren kann ein Modus zum schnelleren sprachlichen Wiedergeben der Fundstellen (schnelleres Wiedergeben auf rein akustischer Ebene - höhere Tonlage, oder in gleicher Tonlage, durch Weglassen von Segmenten bei der Synthese der Wiedergabe durch Vocoder, (mit Interpolation/Glättung der Parameter), durch Weglassen oder Kürzen von Sprachpausen oder durch Ausschneiden von Artefakten (dysfluencies) bzw. nichtsprachlichen akustischen Ereignissen z. B. mittels ,ääh-Filter' usw. integriert werden.

In einer bevorzugten Ausführung der Erfindung ist vorgesehen, dass die Sprachsignale komprimiert aufgezeichnet werden und/oder neben der komprimierten Sprachinformation auch unkomprimierte Signale gespeichert werden.

In der Praxis ist eine Reihe von Verfahren zur Sprachkompression bekannt, z. B. die Recommendations G.723 oder G.729 der ITU (International Telecommunication Union) oder die Recommendation GSM 06.10 von ETSI oder AMR (beschrieben in ETSI EN 301 704 [GSM 06.90]). Diese Verfahren arbeiten mehrstufig. Nach einer Vorbehandlung durch Filter folgt eine Unterteilung in Segmente und eine Signalanalyse, z. B. mittels LPC (Linear Predictive Coding). Die dabei bestimmten Einteilungen (Sprache/Sprachpause, stimmhaft/stimmlos) und die berechneten Parameter (z. B. Energiegehalt, die Autokorrelationskoeffizienten, die LPC Koeffizienten, die LSP Line Spectral Pair Koeffizienten und Parameter weiterer Verarbeitungsstufen) eignen sich auch zum Vergleich von Sprachmustern. Die Zerlegung der Sprache mit diesen Verfahren und das komprimierte Abspeichern reduzieren den benötigten Speicherplatz gegenüber der unkomprimierten Abspeicherung. Gleichzeitig wird der spätere Mustervergleich beschleunigt.
Eine weitere Ausführung der Erfindung speichert neben der komprimierten Sprachinformation auch unkomprimierte Signale.

Zweck dieser Vorgehensweise ist, zu einem späteren Zeitpunkt bessere Algorithmen einsetzen zu können. Die aufgezeichneten Sprachinformationen können über einen längeren Zeitraum (Jahrzehnte) benötigt werden. Bei den meisten Sprachkompressionen gehen unweigerlich Detailinformationen verloren. Da sich sowohl die Leistungsfähigkeit der Informationsverarbeitungsgeräte als auch die Qualität der Algorithmen zum Mustervergleich ständig weiterentwickeln dürften, sollen die Originalsignale zur späteren Verwendung aufbewahrt werden. Der zu erwartende weitere kontinuierliche Kapazitätszuwachs (bei gleichzeitigem Preisverfall) der Speichermedien macht diese Option für den Benutzer erschwinglich.

Ebenso ist es erfindungsgemäß möglich, beim Eingeben anzugeben, welcher Teil der Sprachinformationen auch unkomprimiert gespeichert wird. Die unkomprimierten Signale können auch auf einem anderen Speicher, einem Offline-Speicher, abgelegt werden.

Das Verfahren erlaubt es ferner, verdeckt zu suchen. Wenn bei einem Suchvorgang eine Sprachnotiz gefunden wurde, bei welcher der Vergleich der Sprachmuster des Suchbefehls und Sprachmustern der Sprachnotiz eine vorgegebene Schwelle von Ähnlichkeit überschreitet, wird diese wiedergegeben. Während der Wiedergabe wird die Suche im Hintergrund weitergeführt. Der Zeitaufwand zum Suchen wird hierdurch dem Benutzer teilweise verdeckt.

In einer bevorzugten Ausführung wird während des Aufzeichnens verdeckt gesucht. Stichworte, welche am Anfang oder während der Aufzeichnung gesprochen werden, werden während des Sprechens und Aufzeichnens des Restes der Notiz gesucht. Werden in den bereits abgespeicherten Notizen entsprechende Sprachmuster gefunden, so wird am Ende der Aufzeichnung das (die) gefundene(n) Sprachmuster akustisch wiedergegeben oder, wenn eine Transkription in Text vorliegt, der entsprechende Text. Der Benutzer kann dann entscheiden, ob es (sie) identisch zu dem gesuchten ist (sind). Die Reaktion des Benutzers wird aufgezeichnet, z. B. indem ein Zeiger auf das gefundene Sprachmuster zu dem neu aufgezeichneten Stichwort gespeichert wird. Damit wird eine Liste von Sprachmustern identischer Worte aufgebaut. Diese wird bei späteren Suchvorgängen zur Verbesserung der Trefferrate und Erhöhung der Suchgeschwindigkeit verwendet. Auch bei Nichtübereinstimmung kann ein Zeiger mit einer entsprechenden Kennzeichnung abgespeichert werden. Dieses Vorgehen verhindert, dass bei späteren Suchvorgängen die beiden Sprachmuster nochmals als identisch angenommen werden. Der Suchvorgang nach bereits abgespeicherten, identischen Stichworten kann, in einer weiteren Ausführung dieser Erfindung, länger dauern, als das Sprechen der neuen Notiz.

In einer weiteren Ausführung werden auch die Sprachmuster der in den Suchbefehlen enthaltenen Stichworte, die Zeiger auf die gefundenen Sprachnotizen, die berechneten Abstandswerte und die Reaktion des Benutzers gespeichert. In dieser Ausführung wird davon ausgegangen, dass der Benutzer nach der Wiedergabe einer Notiz eine Wertung vornimmt: RICHTIG, FALSCH. Diese Reaktion wird zusammen mit den Zeigern auf die wiedergegebene Notiz abgespeichert. Bei einem neuen Suchbefehl werden die aktuellen Sprachmuster des Suchbefehls mit den Sprachmustern von früheren Suchvorgängen verglichen. Bei Übereinstimmung der Muster bzw. großer Ähnlichkeit, wird die gespeicherte frühere Reaktion des Benutzers geprüft und sofern positiv, die Sprachnotiz, auf welche der Zeiger der Aufzeichnung des früheren Suchbefehls zeigt, ausgegeben. Die anschließende Reaktion des Benutzers wird wieder mit dem Zeiger zur ausgegebenen Sprachnotiz gespeichert.

Die durch diese Vorgehensweisen entstandenen Strukturen von Stichworten, zugehörigen Zeigern und Benutzerbewertungen können erfindungsgemäß (gleich nach der Aufzeichnung oder später, im Aufzeichnungsgerät oder in einem anderen Gerät) zum Aufbau von Indexklassen, sowie allgemein zur Optimierung der Mustervergleichsverfahren (z. B. durch Optimierung der Gewichtung der einzelnen Sprachparameter in den Distanzfunktionen oder der verschiedenen Schwellwerte) oder zur Auswahl und Anpassung geeigneter Vergleichsfunktionen oder Algorithmen verwendet werden. Diese Vorgehensweise hat einige Vorteile:
- sie verkürzt spätere Suchvorgänge,
- die Treffsicherheit erhöht sich kontinuierlich und
- allmähliche Veränderungen in der Aussprache oder der Stimme des Benutzers werden kompensiert.

Das Durchsuchen der Originalnotizen ist weiterhin möglich.

Ferner ist es erfindungsgemäß möglich, nach dem indirekten Suchen mittels Zeiger eines vorherigen Suchbefehls, die Sprachmuster des neuen Suchbefehls mit den Sprachmustern der aufgezeigten Notiz zu vergleichen und das Ergebnis zur Bestimmung des Abstandswertes zu verwenden.

Ebenso ist es erfindungsgemäß möglich, dass die Wertungen feinstufiger erfolgen: z. B. FALSCH, TEILRICHTIG, RICHTIG. Die Bewertung TEILRICHTIG wird verwendet zum Bewerten von Fundstellen bei denen das gesuchte und das gefundene Stichwort teilweise phonetisch übereinstimmen, beispielweise wenn 'Arzt' gesucht und "Kinderarzt" gefunden wird.

Eine FALSCH-Wertung unterbindet dann auf jeden Fall eine Wiedergabe der entsprechenden Notiz bei einem späteren Suchvorgang. Eine TEILRICHTIG-Wertung stellt die Notiz in der Reihenfolge der gefundenen Kandidaten zurück, z. B. indem dessen Abstandswert durch Multiplikation mit einem Faktor größer eins vergrößert wird. Entsprechend wird eine RICHTIG-Bewertung bei einer späteren Suche die fragliche Fundstelle, in der Reihenfolge der Ausgabe bevorzugen.

In einer weiteren Ausführung wird auch ein Zeiger auf die Aufzeichnung des früheren Suchbefehls, zusätzlich zum Zeiger auf die Fundstelle, mit der Wertung des Benutzers zur Aufzeichnung des aktuellen Suchbefehls abgespeichert. Die aufgezeichneten feinstufigen Wertungen und Benutzerreaktionen können ebenso erfindungsgemäß zu der oben erwähnten Erstellung von Indexklassen sowie zu Optimierungen von Gewichtungsfaktoren, Schwellwerten, Funktionen und/oder Algorithmen verwendet werden, wie z. B. Cluster-Algorithmen.

In einer weiteren Ausführung werden die Reaktionen des Benutzers auf Emotionen untersucht. Erkennbare Emotionen werden bewertet, analog zu den vorher beschrieben Benutzerreaktionen mit dem jeweiligen Kontext aufgezeichnet und später zur Verbesserung der Funktion verwendet. Ebenso können erkannte Emotionen zur kurzzeitigen Veränderung der Reaktionen des Gerätes verwendet werden. So können, bei ablehnenden, verärgerten Reaktionen des Benutzers, die Schwellen für Erkennungssicherheit (confidence levels) angehoben werden, so dass nur noch Fundstellen mit hoher Trefferwahrscheinlichkeit ausgegeben werden. Emotionen können festgestellt werden durch linguistische, para- und extralinguistische Hinweise, z. B. anhand der Wahl der Worte der Antworten ('Ja doch!', Flüche), durch die Dauer einer gesprochenen Antwort ('Neiiinn!!'), durch deren Lautstärke (Energiegehalt relativ zum Energiegehalt früherer Äußerungen), durch Aperiodizitäten in der Stimme, durch die Stimmhöhe (engl. pitch), oder auch mechanisch, etwa durch Schütteln des Gerätes (feststellbar mittels Beschleunigungssensoren) oder gar Wegschmeißen (feststellbar ebenfalls mittels Beschleunigungssensoren: kurze starke Beschleunigung, gefolgt von fast völligem Aussetzen der Schwerkraft - freier Fall/ Parabelflug - dann sollten die Aufzeichnungen in Festwertspeicher schnell abgeschlossen werden!)

Eine zusätzliche Verfeinerung der Suchfunktion erweitert die Suchfunktionalität: Assoziationen. Das Gerät sucht nach den im Suchbefehl enthaltenen Stichworten. Findet es die gesuchten Stichworte in einem früheren Suchbefehl oder in einer Notiz, und enthält der frühere Suchbefehl oder die Sprachnotiz weitere Stichworte, fragt das Gerät durch akustische Wiedergabe dieser Stichworte, ob der Suchvorgang um diese Stichworte erweitert werden soll.

In einer weiteren Verfeinerung werden nur solche Stichworte abgefragt, welche bei mehreren gefundenen Suchbefehlen oder Fundstellen vorkommen.

In der bevorzugten Ausführung werden die zusätzlichen Sprachmuster mit dem häufigsten Vorkommen zuerst wiedergegeben.

Der Benutzer kann dann die Liste der zu suchenden Sprachmuster um diese Muster erweitern, die Muster ignorieren lassen, oder Sprachnotizen, welche dieses Sprachmuster enthalten, von der Wiedergabe ausschließen. Diese Funktion erlaubt es zum einen, die Menge der gefundenen Sprachnotizen sukzessive einzugrenzen, zum anderen, themenverwandte Aufzeichnungen zu finden.

Zur Beschleunigung des Suchens in umfangreicheren Aufzeichnungen kann das Gerät eine Liste mit Stichworten und Zeigern auf die Daten/Informationen (Notizen), zu welchen diese Stichworte gehören, anlegen. Die zu einem Stichwort gehörende Liste kann einen oder mehrere Zeiger enthalten. Bei mehreren Zeigern pro Stichwort kann die Liste zu jedem Zeiger den Abstandswert zwischen dem Stichwort (Sprachmuster) in der Index-Liste und dem Stichwort (Sprachmuster) in der referenzierten Information enthalten. Dem Benutzer kann eine Sonderfunktion zur Verfügung gestellt werden, mit welcher er zu jeder Notiz Stichpunkte diktieren kann. Alternativ können, beim Aufzeichnen von Sprachnotizen, automatisch alle Worte, welche einzeln gesprochen werden, (mit deutlicher Pause am Wortanfang und -ende) in die Indexliste aufgenommen werden. Die Erstellung dieser Liste erfordert Rechenleistung. Deshalb wird sie bevorzugt in Abhängigkeit vom Ladezustand des Akkus bzw. der Batterie erstellt oder wenn das Gerät an eine externe Stromversorgung angeschlossen ist, z. B. während des Ladens des Akkus. Die Liste kann auch in einem anderen Gerät (z. B. Server) erstellt werden.

Darüber hinaus können durch die vorgesprochenen Stichwörter nicht nur aufgezeichnete Sprachnotizen gesucht/ gefunden werden, sondern es können beliebige andere Daten zusammen mit Sprachinformationen (Stichworten) gespeichert und über diese Stichworte gesucht und gefunden werden.

Ein Beispiel hierfür sind Bilddaten von einer im Gerät integrierten digitalen Kamera, welche zusammen mit Sprachnotizen (Stichworten) gespeichert werden. In einer Ausführung erfolgt die Suche, wie bereits dargelegt, mittels Vergleich der im Suchbefehl enthaltenen Sprachmuster und den abgespeicherten Sprachsignale. Die gefundenen Notizen werden zusammen mit den anderen gespeicherten Daten wiedergegeben. Textdaten oder Bilder werden z. B. auf einem Bildschirm ausgegeben; auch Melodien, Musik, Links können zum Beispiel auf Web-Seiten und E-mails ausgegeben werden. In einer Ausführung dieser Erfindung werden in einer digitalen Kamera Bilder zusammen mit den Sprachmustern von Stichworten und/oder von Anmerkungen (Notizen) zu diesen Bildern gespeichert. Die Bilder können später durch Sprechen von Stichworten und Suche nach den entsprechenden Sprachmustern in den mit den Bildern aufgezeichneten Sprachdaten wiedergefunden und z. B. auf einem Display oder Drucker ausgegeben werden.

Ein weiteres Beispiel für das Abspeichern anderer Daten ist die Aufzeichnung von Telefonaten oder Teilen davon, mit oder ohne zusätzlichen Kommentaren und den Telefonnummern. Gesucht werden kann nach Stichworten, zusammen mit Telfonnummern, und mittels der oben beschriebenen Assoziativ-Funktion nach Sprachmustern des Gesprächspartners, z. B. nach dem Sprachmuster seiner Namensnennung beim Melden am Gesprächsanfang.

Bei allen Suchvorgängen können natürlich auch zeitliche Einschränkungen bei der Suche (zwischen Datum und Datum, nach Tageszeit, nach Wochentag, Jahreszeit, usw.) zur Einschränkung des Suchraumes verwendet werden.

Wenn, wie in einem der vorangehenden Beispiele, ein Bild aufgenommen worden ist und Stichworte aufgesprochen und dem Bild hinzugefügt wurden, kann das System (in einer Ausführung) sofort, anhand der Stichworte und/oder anderer Suchkriterien (GPS-Ortung oder Stichworte, welche zu kurz vorher aufgenommen Bildern aufgezeichnet wurden) Vorschläge zur Einordnung machen. Diese Vorschläge erfolgen etwa in der Art, dass die vorher abgespeicherten und als ähnlich eingestuften Stichworte akustisch ausgegeben werden, worauf der Benutzer mit Zustimmung oder Ablehnung reagiert. Diese Reaktionen werden aufgezeichnet und zur Verbesserung von späteren Suchvorgängen bzw. zur Bildung von Indexklassen verwendet. Ebenso kann das System/Vorrichtung bei neu aufgesprochenen Stichworten (aⱼ), welche bereits abgespeicherten Stichworten (bᵢ) ähneln, durch Ausgabe dieser Stichworte (bᵢ) nachfragen, ob diese identisch sind. Auch diese Reaktion des Benutzers kann zur Verbesserung einer Klassenbildung und zur Verringerung der Fehlerrate beim späteren Suchen benutzt und/ oder aufgezeichnet werden.

Eine weitere Funktion des Systems wird in einer weiteren beispielhaften Ausführung der Erfindung bereitgestellt, womit das Editieren der Stichworte ermöglicht wird. Mit Hilfe dieser Funktion ist beispielsweise möglich, neue, zusätzliche Stichworte zu Verweisen hinzuzufügen, frühere zu löschen, die Bildung neuer Kategorien zu veranlassen, Fehler in der Kategorisierung zu beheben, Transkriptionen von Stichworten in Text vorzunehmen oder einen Vorschlag einer automatischen Spracherkennung bestätigen bzw. ablehnen, usw.

Eine weitere Ausführungsform der erfindungsgemäßen Vorrichtung ist mit einer Anschlussmöglichkeit an eine konventionelle Spracherkennung (auch offline) ausgestattet, um die Stichworte auch textbasiert suchen oder an einem Display (bei Nachfragen zwecks Eingrenzung der Fundstellen) ausgeben zu können.

In einer Ausführung dieser Erfindung, bei der das Ein- und Ausgabegerät (Handy) mittels Sprach- oder Datenübertragungsvorrichtung an eine entfernte Speicher- und Rechenvorrichtung angeschlossen ist, ergeben sich die folgenden, zusätzlichen Funktionsabläufe: offline Eingeben, offline Suchen, getrennte Speicher mit unterschiedlichem Speicherumfang, Notwendigkeit von Verschlüsselung.

Offline Eingeben: zur Aufzeichnung neuer Sprachnotizen ist es nicht notwendig, dass eine Kommunikationsverbindung zu dem entfernten Gerät besteht. Die Informationen werden z. B. auf einer Flash-Speicherkarte komprimiert oder unkomprimiert zwischengespeichert. Es können mehrere Notizen gesammelt und zusammen übertragen werden. Die Übertragung kann zu Zeiten erfolgen, in denen günstigere Verbindungstarife gelten oder der Benutzer ohnehin in der Nähe des zweiten Gerätes ist, z. B. Überspielung im Büro auf Arbeits-PC über eine Infrarot- (IrDA) oder Bluetooth-Schnittstelle.

Offline Suchen: wenn der Suchvorgang auf dem entfernten Gerät erfolgen soll, muss keine ständige Verbindung zwischen den beiden Geräten bestehen. Es genügt, wenn der Suchbefehl mit den Sprachmustern, z. B. per IP-Paket, an das entfernte Gerät übertragen wird und das Ergebnis ebenfalls per IP-Paket oder Rückruf übermittelt wird.

Ebenso ist es erfindungsgemäß möglich, Sprachaufzeichnungen auf verschiedenen Geräten gleichzeitig zu speichern. Der Benutzer wird typischerweise ein Ein- und Ausgabegerät in Form eines Handys mit sich führen. Dort können in einer Flash-Speicherkarte, nach heutigem Stand der Speichertechnik und der Kompressionsalgorithmen, Sprachaufzeichnungen bis zu einer Gesamtzeit von einigen Stunden gespeichert werden. Dieser Speicher kann z. B. die letzten Aufzeichnungen (offline Eingeben) und die aktuell sowie die häufig benötigten Notizen beinhalten. Die Aufzeichnungen im Handy werden periodisch oder bedarfsweise, siehe ,offline Eingeben', auf das entfernte Gerät übertragen. Das Suchen kann auf dem lokalen Gerät in den lokalen Aufzeichnungen oder auf dem entfernten Gerät erfolgen. Eine lokale Speicherung ist beispielsweise sinnvoll für Einkaufslisten (shopping-Listen) oder für To-do-Listen.

Das entfernte Gerät kann ein großer, von einem Provider, ähnlich wie bei Sprachboxdiensten, bereitgestellter Server sein. In dieser Ausführung kann eine verschlüsselte Übertragung und eine verschlüsselte Speicherung auf dem Server des Providers wegen der Vertraulichkeit der Daten besonders wichtig sein. Verfahren zur Verschlüsselung von Sprache und Daten sind bekannt. Die Daten sollten zu keinem Zeitpunkt unverschlüsselt auf dem Server oder auf der Übertragungsstrecke vorliegen. In einer besonders sicheren Ausführung dieser Erfindung erfolgt die Suche ausschließlich im Handy anhand der Index-Listen oder mittels Durchsuchen der Stichworte und Zeiger von vorherigen, gespeicherten Suchbefehlen. Der Server dient nur zum Abspeichern der Notizen, Bildern, usw.

In einer weiteren Ausführung kann die Index-Liste oder die Aufzeichnung der früheren Suchbefehle teilweise auf dem Server liegen. Die Indexliste ist dazu hierarchisch gegliedert, die Liste der früheren Suchbefehle ist zeitlich untergliedert. Listen mit älteren Suchbefehlen liegen auf dem Server. Zum Durchsuchen werden die Listen bei Bedarf in das Handy übertragen.

Neben den dargelegten Such- und Klassifizierungsverfahren mittels Abstandswerten (Scores) und 'Dynamischer Programmierung' können auch andere, dem Fachmann bekannte Verfahren, wie z. B. Markov Modelle oder ,Neuronale Netze' oder Verfahren der Fuzzy-Logik zur Realisierung dieser Erfindung verwendet werden.

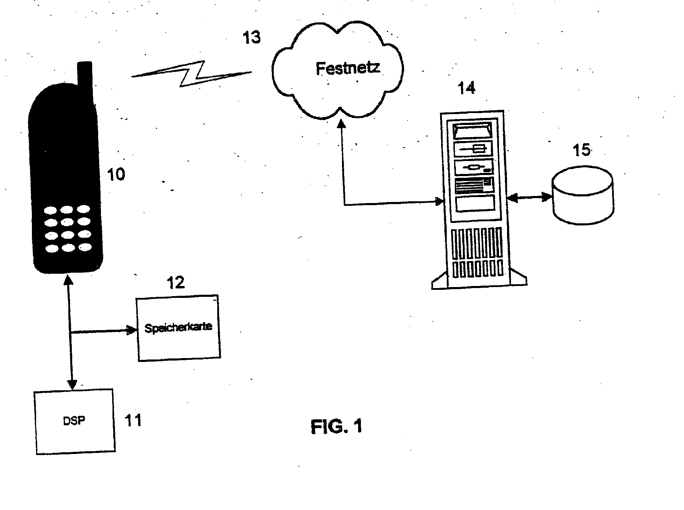

Nachfolgend wird die Erfindung in einem Ausführungsbeispiel näher erläutert. Die Fig. 1 zeigt die schematische Darstellung einer möglichen Kommunikationskonfiguration.

In der folgenden Beschreibung werden die Befehle des Benutzers durch Betätigung von Tasten ausgelöst. Dies können auch Soft-Tasten sein. Es ist auch erfindungsgemäß möglich, die Befehle durch Sprachkommandos zu geben.

Aufzeichnen: Der Benutzer betätigt die RECORD-Taste eines Handys 10 und spricht seine Notiz in das Handy 10. Am Ende drückt er die STOP-Taste. Die Eingabe der Sprache erfolgt über ein Mikrofon des Handys 10. Die analogen Sprachsignale werden in einem Analog-Digital-Wandler digitalisiert und in einen DSP 11 geleitet. Dort werden die Signale durch einen Vorfilter (Hoch- und Tiefpass) geführt, anschließend in Segmente unterteilt (typischerweise 10 bis 20 ms Segmente). Je nach verwendetem Kompressionsstandard überlappen sich die Segmente (z. B. um 10 ms). Die Signalwerte in den Segmenten werden durch eine Hamming-Window-Funktion gewichtet. Danach erfolgt die Berechnung der Autokorrelationsfunktion der Signalwerte in den einzelnen Segmenten. Daraus werden die LPC-Koeffizienten berechnet. Zum Zwecke der Kompression und der Abspeicherung werden diese Koeffizienten und die Sprachsignale entsprechend den Vorgaben des verwendeten Kompressions-Standards weiter verarbeitet. Zum Zwecke des Mustervergleichs werden die LPC-Koeffizienten oder transformierte Darstellungen (z. B. Cepstrum-Koeffizienten, PARCOR-Koeffizienten) als Bestandteil der komprimierten Sprachinformation in einer Speicherkarte 12 abgespeichert. Zusätzlich kann eine Datum- und Zeitmarke abgespeichert werden.

An Stelle der Verwendung des LPC-Verfahrens können auch andere Verfahren zur Sprachkompression und Mustererkennung eingesetzt werden, welche z. B. auf der Kurzzeit-Fourier-Analyse, Cepstrum-Parametern oder Filterbänken beruhen.

Die Aufzeichnung kann auch mittels einer Sprach-/Daten-übertragung 13 auf einem entfernten Gerät, hier einem Server/Rechner 14 erfolgen, der ein Speichermedium/ Plattenlaufwerk 15 umfaßt.

Zum Ablegen einer neuen Notiz können drei verschiedene Modi vorgesehen sein, die vom Nutzer optional genutzt/eingestellt werden können:
a) Notiz nur anlegen, ohne die neuen, aufgesprochenen Sprachmuster mit bereits früher abgelegten Sprachmustern zu vergleichen (alles einfach auf einen Haufen - heap - werfen) ;
b) vor dem Ablegen einer neuen Notiz vergleicht das System die frisch aufgesprochenen Sprachmuster mit den bereits abgelegten und/oder mit "Prototypen" aus den vorhandenen Clustern und macht Vorschläge zur Einordnung der neuen Sprachmuster, welche der Benutzer bestätigen kann oder korrigierend eine Zuordnung vornehmen kann. Dies kann insbesondere in Situationen mit hohem Geräuschpegel wie z. B. auf dem Bahnhof sinnvoll und notwendig sein;
c) automatische Zuordnung der neuen Sprachmuster zu Clustern bzw. Anlegen von neuen Clustern. Dabei werden Sprachmuster Clustern zugeordnet, bei welchen das Abstandsmaß einen vorgegebenen Schwellwert unterschreitet. Andernfalls wird ein neuer Cluster angelegt.

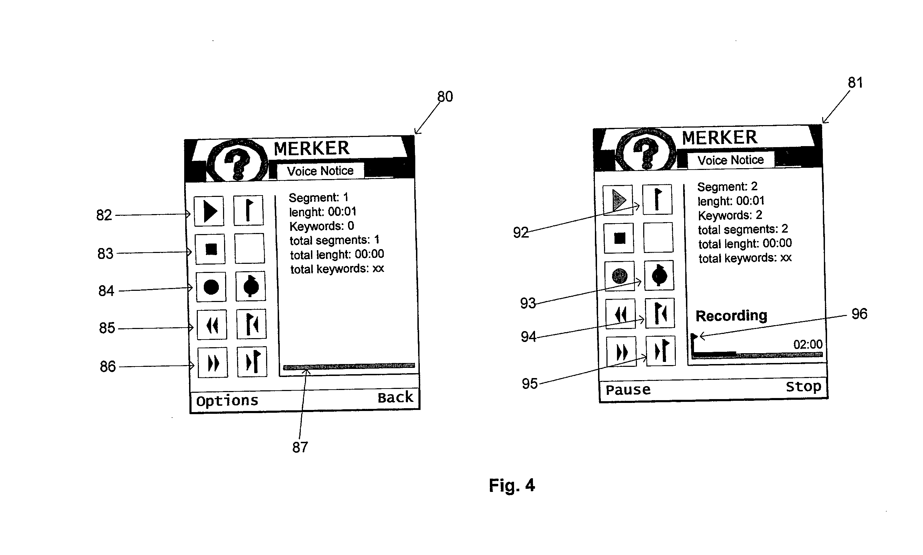

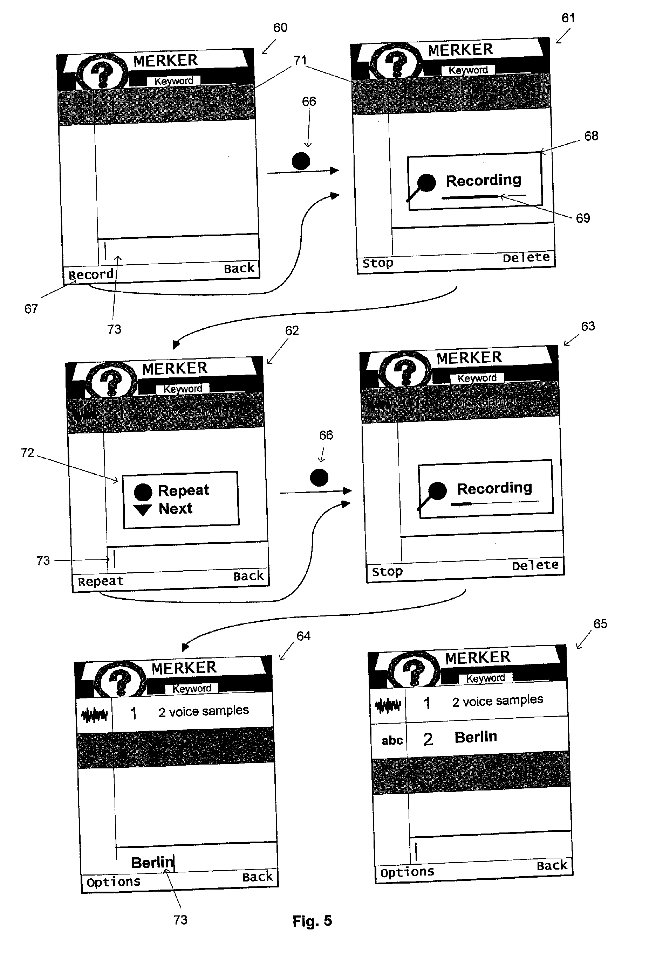

   Die Fig. 4 und 5 zeigen zwei Varianten für das Aufzeichnen von Stichworten. In diesen Ausführungen werden die Stichworte explizit eingegeben. Das ist sinnvoll, wenn die Rechenleistung oder die eingesetzten Algorithmen nicht zu einer Suche in Fließsprache ausreicht bzw. geeignet sind, oder die Hintergrundgeräusche so stark sind, dass eine automatische Wortanfang- bzw. Wortenderkennung unzuverlässig ist.

Fig. 4 zeigt eine Benutzeroberfläche 80, 81 welche das abwechselnde Eingeben von Sprachnotizen und expliziten Stichworten erlaubt. Das Display zeigt die von herkömmlichen Aufzeichnungsgeräten bekannten Funktionen: Wiedergeben 82, Stop 83, Aufnahme 84, schneller Rücklauf 85 und schneller Vorlauf 86. Mithilfe dieser Bedienelemente (angesteuert über die Navigationstasten oder einen Joystick) werden die Notizen (Fließsprache) aufgezeichnet. Der Balken 87 zeigt den Fortgang der Aufnahme an. Zur Eingabe von Stichworten gibt es zusätzlich die Bedienelemente "Stichwort wiedergeben" 92, "Stichwort aufnehmen" 93, "Springe zum vorherigen Stichwort" 94, und "Springe zum nächsten Stichwort" 95. Stichworte und Fließtext können sich beliebig abwechseln. Auch können mehrere Stichworte unmittelbar hintereinander eingesetzt werden. Eine "Flagge" 96 zeigt die Position eines Stichwortes im Fließtext an.

Fig. 5 zeigt eine Folge von Display-Anzeigen 60, 61, 62, 63, 64, 65, welche zum Aufzeichnen von Stichworten verwendet werden kann. Die Aufgabenstellung bei dieser Benutzerführung ist, den Benutzer dazu zu bewegen, einzelne Stichworte mehrfach zu sprechen. Dadurch sammelt das System, sofern der Benutzer die Aufforderung zu Wiederholungen folgt, mehrerer Sprachproben eines gleichen Stichwortes. Das ermöglicht eine bessere Erkennungsrate beim Suchen/Einordnen und eine explizite Cluster-Bildung, welche auch als Grundlage für eine weitere, automatische Cluster-Bildungen dienen kann. Ferner erhält der Benutzer die Möglichkeit, einzelnen Stichworten bzw. Clustern einen kurzen Text hinzuzufügen. Fig. 5 zeigt einen typischen Ablauf. Bild 60 zeigt das Display nach dem Aufruf der Funktion "Stichworte eingeben" (Keywords). Ein erstes Feld 71 ist markiert. Durch Betätigen der Taste "Select" 66 oder der Soft-Taste "Record" 67 beginnt das Gerät mit dem Aufzeichnen eines Stichwortes. Das Display 61 zeigt ein Fenster 68 mit einem "Progress-bar" 69. Dieser stellt die Länge der Aufzeichnung, bzw. die verbleibende Aufnahmezeit dar. Nachdem die Soft-Taste "Stop" betätigt wird, einscheint die Display Anzeige 62. Das Fenster 72 zeigt dem Benutzer zwei Optionen an: Stichwort wiederholen (Repeat) mittels Select-Taste oder zum nächsten Stichwort weitergehen (Taste mit Pfeil nach unten oder entsprechende Bewegung des Joysticks). Wenn der Benutzer bereit ist, das Stichwort zu wiederholen, betätigt er die Select-Taste und der Vorgang wiederholt sich 63, wie beim ersten Aufzeichnen. Das System speichert beide Aufzeichnungen mit dem Vermerk, dass beide (Fehlbedienung oder sonstiger Benutzerirrtum vorbehalten) verschiedene Sprachmuster eines Wortes sind (hoher "Konfidenzwert"). Das System kann den Vorgang (Einladung zu Wiederholung eines Stichwortes) noch eine vorgegebene Anzahl von Malen wiederholen, oder, in einer anderen Ausführung, die Abstandswerte zwischen den gerade aufgezeichneten Sprachmustern berechnen, und anhand dieser Abstände, und/oder der Abstände dieser Sprachmuster zu Sprachmustern anderer Stichworte, solange zu Wiederholungen auffordern, bis genügend Sprachproben vorliegen, um (z.B. durch statistische Methoden) Cluster-Merkmale bestimmen zu können. Anstelle einer Wiederholung kann der Benutzer zum nächsten Stichwort übergehen 64 (mittels Joystick oder Navigationstaste) oder einen Text (mittels der entsprechenden, in Fig.5 nicht gezeigten, Tasten) zum vorgesprochenen Stichwort eingeben (dieser wird in Feld 73 angezeigt), oder die Eingabe von Stichworten beenden (in diesem Beispiel durch Betätigen der Soft-Taste 'Back'). In dem in Fig. 5 gezeigten Beispiel sind im letzten gezeigten Zustand 65 zwei Sprachmuster des ersten Stichwortes abgelegt. Das erste Stichwort ist nicht mit Text versehen. Das zweite Stichwort besteht nur aus dem Text "Berlin", ohne Sprachmuster. Das System wartet auf das Vorsprechen des ersten Musters eines dritten Stichwortes (Record-"Soft"-Taste), oder das Eingeben eines Textes zum dritten Stichwort (mittels Tastatur) oder auf das Beenden der Stichworteingabe (Back-"Soft"-Taste).

Suchen: Der Benutzer drückt die SEARCH-Taste des Handys 10 und spricht, während er die Taste gedrückt hält, die zu suchenden Stichworte. Das Gerät 10 sucht nach entsprechenden Notizen und gibt die erste, gefundene Sprachinformation akustisch wieder. Der Benutzer kann dann zum Weitersuchen bzw. zur Ausgabe der nächsten gefundenen Notizen die NEXT-Taste drücken, oder eine Taste zur Bewertung (RCHTIG, FALSCH) drücken und anschließend bei Bedarf die NEXT-Taste. Die Verarbeitung der Sprachsignale erfolgt analog der beim 'Aufzeichnen' beschriebenen. Die im Suchbefehl enthaltenen Sprachmuster können ebenso abgespeichert werden. Anschließend werden die LPC-Parameter oder transformierte Darstellungen, z. B. Cepstrum-Koeffizienten, der Mustererkennung zugeführt. Zur Mustererkennung werden die Parameter zu Vektoren zusammengefasst. Die Sprachmuster der einzelnen Stichworte werden zu Folgen von Vektoren zusammengefasst. Anschließend werden sie mit den abgespeicherten Sprachinformationen verglichen. Die Anpassung an die unterschiedliche Sprechgeschwindigkeit der Muster erfolgt mit dem als ,Dynamische Programmierung' bekannten Verfahren. Für jedes Stichwort wird in jeder Notiz der Abstandswert (Score) zu dem ähnlichsten abgespeicherten Muster ermittelt. Je nach Einstellung des Gerätes wird die erste gefundene Notiz, welche Muster enthält, deren Abstandswerte unter einem vorgegebenen Schwellenwert liegen, ausgegeben und weitergesucht. In einer anderen Einstellung werden zuerst alle Aufzeichnungen durchsucht, die Notizen nach ihren Abstandswerten sortiert und die mit den kleinsten Abstandswerten zuerst ausgegeben. Bei jedem Betätigen der NEXT-Taste wird die Notiz mit der nächst niedrigeren Wertung wiedergegeben. Vor dem Wiedergeben einer Notiz wird der Zeiger auf diese Notiz zur Aufzeichnung des Suchbefehls hinzugefügt. Ebenso werden Wertungen, welche der Benutzer nach Anhörung der Notiz eingibt, zur Aufzeichnung des Zeigers hinzugefügt.

### Unterschiede zu Spracherkennungssystemen

Spracherkennungssysteme sind für andere Aufgaben konstruiert. Ihr Zweck besteht darin, eine diktierte Eingabe möglichst fehlerfrei in Schriftform zu konvertieren. In Spracherkennungssystemen erfolgt eine Abbildung von gesprochener Sprache auf eine vorgegebene, im Allgemeinen erweiterbare Menge von Worten oder Funktionen. Entsprechend ist der Aufbau der Algorithmen. Die Abbildung erfolgt in mehreren Schritten. Insbesondere die letzten Schritte unterschieden sich von der Vorgehensweise gemäß dieser Erfindung. Sie verwenden statistische Modelle (meistens Hidden-Markov-Modelle) mit Angaben über die Häufigkeiten von Übergängen zwischen Sprachsegmenten (Sprachlaute oder Phoneme). Diese werden teilweise durch eine für den Benutzer lästige Trainingsphase vor der Erstbenutzung angepaßt. Bei dem erfindungsgemäßen Verfahren entfällt die Trainingsphase vor der Erstbenutzung. Auch ist der Wortschatz (Stichworte) nicht a priori festgelegt, sondern ergibt sich dynamisch und automatisch beim Aufzeichnen und Suchen. Ein weiterer Unterschied: beim Spracherkennungssystem gibt es zu jedem gesprochenen Wort eine 'richtige' Abbildung, nämlich die, welche der Benutzer beabsichtigt hat. Im erfindungsgemäßen Gerät kann ein Stichwort mehrere richtige "Treffer" haben.

Im Vergleich zu Spracherkennungssystemen hat der Benutzer eine größere Toleranz gegenüber Fehlern beim Suchen.

Nachfolgend wird eine Erweiterung auf Suchfunktionen in Flash-Speicherelementen beschrieben. Diese hat zwei entscheidende Vorteile: Performance und Zugangsschutz. In Fig. 1 ist ein Handy 10 mit einem DSP 11 und einer Speicherkarte 12 dargestellt. Die Speicherkarte 12 kann die Sprachnotizen und/oder die Bilder (bzw. andere Informationen wie Musikstücke, Adressen, usw.) und/oder die Index-Datei enthalten. Diese Konstellation hat einen Nachteil: bei den meisten der heute gebräuchlichen kleinen Speicherkarten, z. B. MultiMediaCard, Memory Stick, erfolgt die Übertragung der Daten zum Host-System über einen seriellen Bus. Diese seriellen Busse haben eine so geringe Bandbreite, dass der Suchvorgang, sofern das Suchprogramm im Handy 10 oder im DSP 11 abläuft, und die Daten sich auf der Speicherkarte 12 befinden, erheblich verlangsamt wird. Deshalb werden in einer Ausführung dieser Erfindung spezielle Karten verwendet, welche neben dem Speicher für die Indexdateien und/oder die Sprachnotizen, Bildern, usw. einen Suchprozessor auf der Karte enthalten. Über die Schnittstelle zur Karte werden dabei nur die Suchbefehle mit den zugehörigen Sprachmustern, bzw. die Resultate in Form von Zeigern auf die gefundene(n) Informationen oder von Sprachdaten der gefundenen Notizen, bzw. der zu der (den) Fundstelle(n) gehörenden Daten übertragen. Wenn die Speicherkarte 12 nur die Indexdateien enthält, können die Sprachnotizen auf einem Server oder PC 14 liegen. Nach dem Suchvorgang in der Karte werden anschließend die gefundenen Notizen/Bilder/Informationen vom Server/PC 14 abgerufen.

Die vorgestellte Architektur hat einen weiteren Vorteil: den Zugangsschutz. Die Speicherkarte 12 kann mittels Passwort oder anderer Authentifizierungsmechanismen (z. B. biometrische Verfahren) gegen unberechtigte Zugriffe geschützt werden. Wenn die Notizen/Informationen und, sofern vorhanden, die Indexdateien in dem Kartenspeicher liegen, ist damit ein guter Schutz gegen unberechtigte Zugriffe gegeben. Werden nur die Indexdateien incl. Stichworten auf der Karte gespeichert, so können die Notizen/Informationen verschlüsselt auf einem Server/PC abgelegt werden. Die gefundenen Notizen/Informationen werden vor der Ausgabe erst zur Karte transferiert, dort entschlüsselt und in das Handy 10 zur Wiedergabe weitergeleitet. Bei der Aufnahme von Sprachnotizen, Bildern oder anderen Informationen erfolgt der Transfer umgekehrt: die Sprachdaten, Bilder, usw. werden vom Handy 10 zur Speicherkarte 12 transferiert, dort werden, sofern vorhanden, die Indexdateien erweitert, die Sprachdaten der Notiz, die Bilder, bzw. andere zu speichernde Daten gespeichert und/oder verschlüsselt und dann zum Server/PC 14 weitergeleitet. Für die Übertragung der Sprachdaten in verschlüsselter und unverschlüsselter Form in Echtzeit reicht die Bandbreite der seriellen Schnittstellen.

Bei Geräten zum rein persönlichen Gebrauch kann zur Absicherung gegen Abhören von vertraulichen Aufzeichnungen durch Dritte beim Einschalten oder während des Gebrauchs eine Sprecherüberprüfung mittels der bekannten, sprachbasierten Sprecherverifikationsverfahren stattfinden.

In der vorliegenden Darstellung wurde zur Eingabe der Sprachdaten beispielhaft ein Handy angegeben. Es ist erfindungsgemäß ebenso möglich, die Spracheingabe mittels Festnetztelefon vorzunehmen, oder allgemein über ein Mikrofon welches beispielsweise an einem PDA, einem Noteboot, einem Laptop, einer digitale Kamera oder einem "wearable computer" verbunden, oder in diese integriert ist. Gleiches gilt für die Ausgaben.

Ein weiterer Aspekt der Erfindung besteht in einer verbesserten Benutzerführung beim Aufsprechen und Suchen von Sprachnotizen.

Ein Ansatz, der dieses Problem betrifft, besteht beispielsweise in einem Verfahren und einer Vorrichtung, mit dessen/deren Hilfe ein Benutzer Sprachnotizen aufzeichnen kann, und diese zu einem späteren Zeitpunkt durch Vorsprechen von einem oder mehreren in der ursprünglichen Sprachnotiz enthaltenen oder im Zusammenhang mit der Notiz aufgezeichneten Stichworten wieder zu finden. Zusammen mit den Sprachnotizen, bzw. Stichworten können auch andere Daten, wie z. B. Bilder, Video-Sequenzen, oder Links auf andere Multimediadaten aufgezeichnet sein und gesucht werden. Dieses Verfahren verwendet kein fest vorgegebenes Vokabular von potentiellen Stichworten. Vielmehr entsteht während der Benutzung, also durch Aufsprechen von Notizen und Stichworten sowie durch Vorsprechen von Suchstichworten, ein dynamisch wachsendes Vokabular. Das Wiederfinden und Vergleichen von Sprachmustern ist aber in aller Regel nicht fehlerfrei möglich. Dies liegt insbesondere daran, dass ein Benutzer ein Wort bei mehrfachem Aussprechen immer (leicht) unterschiedlich ausspricht. Diese gilt verstärkt bei unterschiedlichen Sprechern. Hinzu kommen variierende Hintergrundgeräusche, wechselnde Kanaleigenschaften der Aufnahme- und Übertragungsvorrichtungen, usw. Das führt dazu, dass der Benutzer bei der Aufnahme nie ganz sicher sein kann, ob das gerade gesprochene Stichwort auch später wiedergefunden werden kann. Die vorliegende Erfindung verbessert die Wiederfindungsrate durch akustische und/oder optische Rückkopplungen während dem Vorsprechen von Stichworten.
In der oben erwähnten US-Patentschrift US 6,041,300 wird ein System zur Sprachwahl bei Telefonen beschrieben, welches beim Suchen das vorgesprochene Suchmuster in 'Lefeme' zerlegt, auf deren Basis ein Vergleich mit den Referenzworten durchgeführt wird, anschließend ein gefundenes Referenzwort aus dessen 'Lefemen' synthetisiert und dem Benutzer zur Bestätigung akustisch wiedergibt. Hier erfolgt die Rückfrage allerdings erst nach dem Suchen, im Gegensatz zu den in dieser Beschreibung vorgestellten Rückkopplungen beim Aufzeichnen. Außerdem wird die Rückfrage in US 6,041,300 nur verwendet, um das Wählen des richtigen Partners sicherzustellen. Ein Verfahren zur VERBESSERUNG der Vergleichsalgorithmen und -parameter/gewichte durch Auswertung der Benutzerreaktionen sieht US 6,041,300 hingegen nicht vor.

Viele neue Handys und PDAs verfügen über ein Display 20, welches die Darstellung von kleinen Grafiken und Bildern ermöglicht, und, zum Bewegen eines Cursors oder zur Auswahl von Menüpunkten, über Navigationstasten 21, oder alternativ einen kleinen Joystick (diese Variante ist nicht dargestellt). Die Handys besitzen eine numerische Tastatur. Eine komplette alphanumerische Tastatur besitzen hingegen nur wenige.

Deshalb umfasst eine Ausführungsform der Erfindung ein Verfahren zur Benutzerführung beim Aufsprechen und Suchen von Sprachnotizen und Stichworten, welches unter Zuhilfenahme der bei Handys und PDAs gängigen Anzeige- 20 und Bedienelemente 21, 22, 23, 24, dem Benutzer auf intuitive und einfache Art und Weise das Suchen erleichtert und dabei (verdeckt, implizit) Informationen zu einer Verbesserung der Suchverfahren und Parameter, bzw. der Clusterbildungs-Algorithmen sammelt. Eine spezielle Ausführungsform der Erfindung verschafft dem Benutzer von Geräten, welche die genannten Elemente 20, 21, 22, 23, 24 nicht oder nur zum Teil besitzen, durch eine eingeschränkte Form des vorgestellten Verfahrens, trotzdem einige Vorteile der verbesserten Benutzerführung.

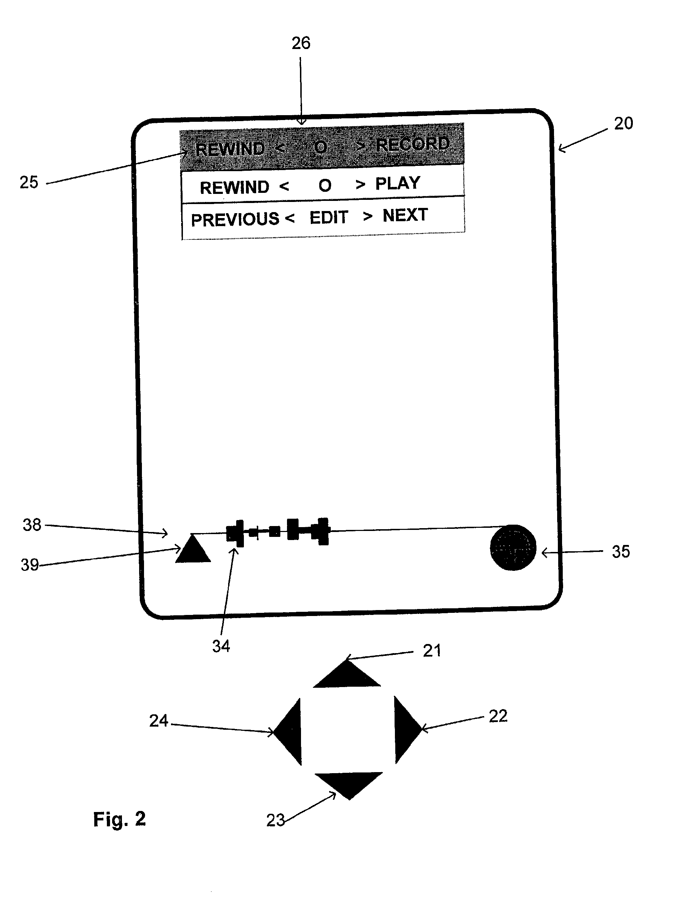

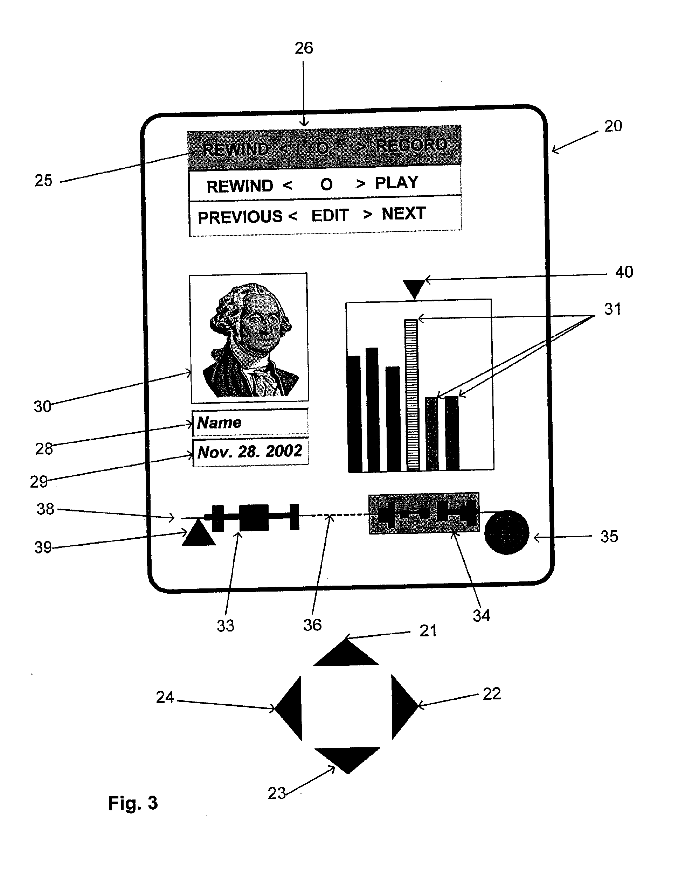

Das Verfahren soll mit Hilfe von Fig. 2 und 3 beschrieben werden. Nach dem Starten der Applikation erscheint auf dem Display 20 ein Menü 25. Mit den Navigationstasten 21 UP und DOWN 23 (oder entsprechenden Bewegungen mit dem Joystick) kann der Benutzer die einzelnen Elemente des Menüs auswählen. Zum Aufzeichnen von Sprachnotizen und Stichworten wählt er das oberste Element 26. Durch Betätigen der rechten Navigationstaste 22 beginnt die Aufnahme. Die Aufnahme dauert in dieser Realisierung solange, wie die Taste betätigt wird. Auf dem Display wird schematisch ein Aufnahmekopf 39 dargestellt, über welchen sich ein Band 38 nach rechts bewegt, und eine schematische Tonbandspule 35, die das Band aufwickelt. Die aufgezeichneten akustischen Signale werden (hier stark vereinfacht, schematisch dargestellt) als Amplituden 33, 34 entsprechend ihrem Energiegehalt dargestellt. Während der Aufzeichnung bewegt sich das Band mit den dargestellten Signalen nach rechts (siehe Unterschied von 34 in Fig. 2 und Fig. 3).

Während der Aufzeichnung wird das Signal kontinuierlich auf Sprachpausen durchsucht. Wird eine solche gefunden (oder vermutet), wird der entsprechende Zeitabschnitt im Signal auf dem Display markiert. In Fig. 3 geschieht das durch die Darstellung einer unterbrochen (gestrichelten) Linie 36. (Andere Markierungen sind auch erfindungsgemäß möglich, z. B. farbliche Markierung des Linieabschnitts, farbliche Markierung des Hintergrunds des Zeitabschnitts, Blinken des Linienabschnitts und/oder des Hintergrunds) Dadurch hat der Benutzer die Möglichkeit sofort zu reagieren: wenn z. B. eine feste Linie, eventuell sogar mit Signalausschlägen während einer Sprechpause angezeigt wird, kann er z. B. durch Zurückspulen (REWIND) oder mittels Editierfunktionen (hier nicht ausgeführt, da von anderen Programmen zum Editieren von Audiodateien bekannt) den betroffen Zeitabschnitt `herausschneiden'. Umgekehrt, wenn eingegebene Sprache als Sprechpause (gestrichelte Linie) dargestellt wird, oder wenn, was häufiger vorkommt, Teile eines Wortes (mit niedrigem Energiegehalt) als Sprechpause eingestuft werden, kann er durch Unterbrechen der Aufnahme, Löschen des entsprechendes Sprachabschnitts und erneutes Aufzeichnen, diesmal mit lauterer Stimme, den Fehler korrigieren. Alternativ kann er mit Hilfe des Editors die Wortgrenzen im dargestellten Signal explizit (z. B. durch manuellen Eingriff über Tastatur) setzen. Ferner kann der Benutzer die Einstellungen der Aufnahmefunktion, wie z. B. die Eingangsverstärkung verändern.

Üblicherweise werden Stichworte dadurch von dem übrigen Text (Fließtext) unterschieden, dass sie eine Sprechpause von einigen 100 ms vor und hinter dem Wort haben, und selbst nicht länger als etwa 1 bis 3 s sind. Andere Werte sind möglich. Ebenso können die Zeiten durch den Benutzer auf seine individuellen Präferenzen einstellbar sein. Das hier vorgestellte Verfahren beobachtet das aufgezeichnete Signal kontinuierlich auf diese Kriterien. Wird ein Sprachmuster als Stichwort eingestuft, so wird dies auf dem Display in unserem Beispiel durch eine farbliche Hervorhebung des Hintergrunds des betreffenden Sprachmusters 34 in Fig. 3 dargestellt. (andere Markierungen sind ebenso erfindungsgemäß möglich: Änderung der Farbe des Signals, Blinken, usw.) Auch hier kann der Benutzer reagieren, wenn er eine Einstufung als Stichwort nicht wünscht. Typischerweise ist das der Fall wenn z. B. Hintergrundgeräusche, Räuspern, Atemgeräusche, Versprecher oder "Öhhhs" oder typische Hintergrundgeräusche wie Quietschen einer Tür oder eines Stuhls, Telefonklingeln u. ä. aufgezeichnet wurden. Eine Möglichkeit, die Einordnung solcher Artefakte als Stichwort zu reduzieren, besteht in der Aufstellung von Clustern derartiger Artefakte. Solche Cluster können dann als Ausschlussliste klassifiziert werden. Mit deren Hilfe kann das System automatisch Artefakte unterdrücken, die durch die erwähnten Regeln, mit denen Stichworte vom System erkannt werden (z. B. vorgegebene Sprechpausen), als Stichwort gewertet werden würden. Das Anlegen dieser Cluster kann beispielsweise dadurch erfolgen, dass solche Artefakte beim Aufnehmen vom Benutzer verworfen werden, sie aber dennoch abgespeichert und mit ähnlichen Mustern eventuell später zu Clustern zusammengefasst werden.

In der bevorzugten Ausführung der Erfindung wird nach dem Einstufen eines Sprachmusters als Stichwort, dieses im Hintergrund (also während die Aufzeichnung weiter läuft) mit den Referenzmustern verglichen. In der einfachsten Ausführung wird, wenn ein ,hinreichend ähnliches' Referenzwort (d. h. dessen Ähnlichkeit liegt über einem vorgebbaren Schwellwert) gefunden wird, dieses als Balken 31 im Display dargestellt. Die Höhe (oder Breite, Farbintensität, Helligkeit, oder ähnliches) gibt den Grad der Ähnlichkeit mit dem Suchmuster an. Sofern noch Zeit verbleibt, etwa weil kein neues, aufgezeichnetes Sprachmuster die Kriterien als Stichwort erfüllt, oder weil der Benutzer eine Pause eingelegt hat (Taste losgelassen) wird nach weiteren, ähnlichen Referenzworten gesucht. So wie ein weiteres gefunden wird, wird dieses ebenfalls als Balken 31 dargestellt, wobei wieder der Grad der Ähnlichkeit durch dessen Höhe (Breite, ...) dargestellt wird. Wenn mehr ,ähnliche' Referenzworte gefunden werden als auf dem Display dargestellt werden können, werden die mit der geringsten Ähnlichkeit entfernt. Die Suche hört auf, wenn ein neues Sprachmuster als Stichwort eingestuft wurde, oder wenn das aktuelle Stichwort mit alle Referenzworten verglichen wurde.
Der Benutzer kann die Aufzeichnung unterbrechen, zu dem Menüpunkt EDIT gehen und jedes, als Balken dargestellte Referenzwort einzeln auswählen (In Fig.3 zeigt der Zeiger 40 auf das ausgewählte Referenzwort), und sich dieses akustisch ausgeben lassen. Er kann anschließend (z. B. durch Soft-Tasten, hier nicht weiter ausgeführt) die Gleichheit von Stichwort und Referenzwort bestätigen oder verneinen. Diese Benutzerangaben speichert das System und verwendet sie später bei der Darstellung von Balken 31 (siehe unten), zu Klassenbildungen (auch Cluster-Bildung), beim Suchen, und/oder zum Optimieren von Suchalgorithmen und -Parametern.

In einer bevorzugten Ausführung der Darstellung der gefundenen Referenzworte, werden die Balken von den Referenzmustern, von denen bekannt ist (z. B. durch vorangegangene Benutzerbestätigung), dass sie das selbe Wort darstellen, markiert. Das kann z. B. dadurch erfolgen, dass die Balken verschiedener Muster des gleichen Wortes in der gleichen Farbe, mit gleicher Schraffur, und/oder räumlich nebeneinander (mit kleinerem Abstand untereinander als zu den übrigen Balken) dargestellt werden. Bestätigt der Benutzer, dass das neue Stichwort zu einer dargestellten Gruppe gehört, wird das neue Muster in der entsprechen Gruppe von Referenzmustern eines Stichwortes hinzugefügt. Dadurch ergibt sich automatisch eine Verbesserung der Erkennungssicherheit des Gesamtsystems. Die so gebildeten Gruppen können darüber hinaus auch zur Optimierung der Suchalgorithmen verwendet werden.

In einer weiteren Ausführung hat der Benutzer die Möglichkeit, einzelnen Referenzworten Bilder, Ikonen, Piktogramme oder ähnliche grafisch Darstellungen zuzuordnen. Die Piktogramme, Bilder, usw. welche dem Referenzwort mit der größten Ähnlichkeit zugeordnet sind, werden in einem Fenster 30 wiedergeben. Beim Editieren werden die Bilder der Referenzworte wiedergegeben, welche gerade selektiert sind (angezeigt durch den Pfeil 40 in Fig. 3. Sofern Bilder mit dem Referenzwort verbunden sind, können diese auch, besonders bei kleinen Displays, in Thumbnail-Darstellung wiedergegeben werden. Neben Bildern, Ikonen, usw. kann ebenso Text (z. B. der Name) mit dem Referenzwort abgespeichert sein. Dieser Text wird in der bevorzugten Ausführung in einem weiteren Feld 28 im Display angezeigt. Dieser Text kann vom Benutzer selbst manuell auf dem Handy bzw. PDA, oder nach dem Austausch der entsprechenden Datensätzen auf einem PC eingegeben werden. Ebenso kann er von einer automatischen Spracherkennungssystem generiert worden sein. In einem weiteren Feld 28 wird das Datum und die Uhrzeit (nicht dargestellt) der Aufzeichnung des Referenzmusters ausgegeben.
Sinn dieser grafischen Rückkopplung ist es, dem Benutzer während dem Aufsprechen Hinweise zu geben, ob die Spracheingabe ungestört und korrekt eingeordnet wird. Außerdem soll sie ihm Hilfsmittel zur Korrektur von erkannten Fehlern geben. Abhängig von der Geschwindigkeit des Systems, kann der Benutzer nach dem Vorsprechen eines Stichwortes warten, bis das System auf dem Display anzeigt, dass ein Referenzwort mit hohem Ähnlichkeitswert gefunden ist, und/oder das zugehörige Bild/Ikone oder Text anzeigt, dass das richtige Referenzwort zugeordnet wurde, und anschließend mit seiner Aufzeichnung fortfahren. Bei Systemen mit höherer Leistungsfähigkeit kann der geschilderte Ablauf auch ohne Unterbrechung erfolgen. Wenn Handys, PDAs oder ähnliche Geräte benutzt werden, kann das eigentliche Suchen und Vergleichen ebenso wie die Unterteilung in Sprache und Sprachpausen auf einem anderen Gerät, wie einem Server des Netzwerkbetreibers oder einem PC erfolgen. Die Daten werden dabei vom Handy/PDA z. B. mittels GPRS, HCSD oder UMTS mit einem Server des Providers, oder im Büro oder zuhause mittels Bluetooth, Infrarot-Schnittstelle oder WLAN mit einem PC ausgetauscht.

Die bisherigen Darstellungen setzen ein Handy/PDA mit einem grafischen Display, einem Freisprechmodus oder einem Headset (sonst kann man das Display nicht beobachten) sowie genügend Rechenleistung im Handy/PDA voraus. Einige der Hilfen, welche durch diese Erfindung ermöglicht werden, können aber auch mit einfachen Handys und Telefonen realisiert werden. In einer Minimalversion übernimmt das Handy bzw. das Telefon nur die Spracheingabe und -ausgabe. Ein über einen Sprachkanal verbundener Server oder PC übernimmt das Suchen nach Sprachpausen/Stichworten, ebenso wie das Vergleichen von Stichworten mit den Referenzworten. Die Ablaufsteuerung kann im einfachsten Fall mittels DTMF-Eingaben vom Benutzer erfolgen. Die Rückkopplung zum Benutzer erfolgt im Wesentlichen mittels Geräuschen oder kurzen Ansagen. Während der Server/PC auf Sprachnotizen oder Stichworten wartet, erzeugt er ein regelmäßiges Geräusch. Das kann z. B. eine leiser Piepser im Abstand von einigen Sekunden, oder ein simuliertes Ticken einer Uhr sein. Ein kurzer Piepser mit hoher Frequenz (z. B. 3kHz) hat den Vorteil, dass sein Echo, welches in vielen Systemen im Eingabekanal zurück kommt, leichter aus den Sprachsignalen ausgefiltert werden kann. Sowie das System Sprache erkennt, wird dieser Piepser/Ticken entweder unterbunden, oder durch andere akustische Signale ersetzt (z. B. dem Laufgeräusch eines Tonbandes). Wenn der Server/PC in der Spracheingabe ein Stichwort entdeckt hat (gemäß den oben beschriebenem Verfahren: Pause - max. 1 bis 3 s Sprache - Pause) sendet er ein kurzes Signal, z. B. ein 'Klick'. Wenn der Benutzer wirklich ein Stichwort gesprochen hat, kann er mit der Eingabe einfach weiterfahren, oder eine Sprechpause einlegen. Der PC/Server wird dann das gerade eingegebene Muster mit den Referenzmustern vergleichen, und, je nach eingestelltem Betriebsmodus, alle Referenzmuster welche einen bestimmten Ähnlichkeitswert überschreiten in der Reihenfolge ihres Auffindens, in der Reihenfolge abnehmender Ähnlichkeit oder nur das Referenzwort mit dem größten Ähnlichkeitswert als gesprochenes Wort/Wörter zurücksenden. Mittels DTMF-Steuerung kann der Benutzer die richtigen Zuordnungen treffen (hier nicht weiter dargelegt). Handelt es sich aber beim dem als Stichwort eingestuften Muster um Hintergrundgeräusche, Räuspern, Atemgeräuschen, usw. kann der Benutzer, im einfachsten Falle mittels DTMF-Kommandos das Muster als 'Abfall' verwerfen.

Ein erweiterte Ausführungsform sieht allerdings vor, diese Artefakte nicht als 'Abfall' zu verwerfen, sondern auch die Artefakte in Clustern zu klassifizieren, denn mit Hilfe dieser Cluster können - wie oben bereits beschrieben-Artefakte automatisch erkannt und unterdrückt werden.

Selbstverständlich können auch Mischformen der eben dargelegten "akustischen Rückmeldung" mit der zuerst beschrieben "grafischen Rückkopplung" realisiert werden.

In einer Erweiterung, welche sowohl mit der zuletzt beschriebenen Minimal-Version, als auch mit den besser ausgestatteten Handys/PDAs erfolgen kann, werden auch die vom Benutzer als 'Abfall' klassifizierten akustischen Muster aufgehoben (dauerhaft gespeichert), und einer oder mehreren, besonderen Klassen zugeordnet. Zweck dieses Vorgehens ist, neue Muster nicht nur mit den 'guten' Referenzmustern zu vergleichen, sondern auch mit den Mustern von Störgeräuschen, und damit eine automatische Erkennung solcher Geräusche zwecks ihrer Unterdrückung zu ermöglichen.

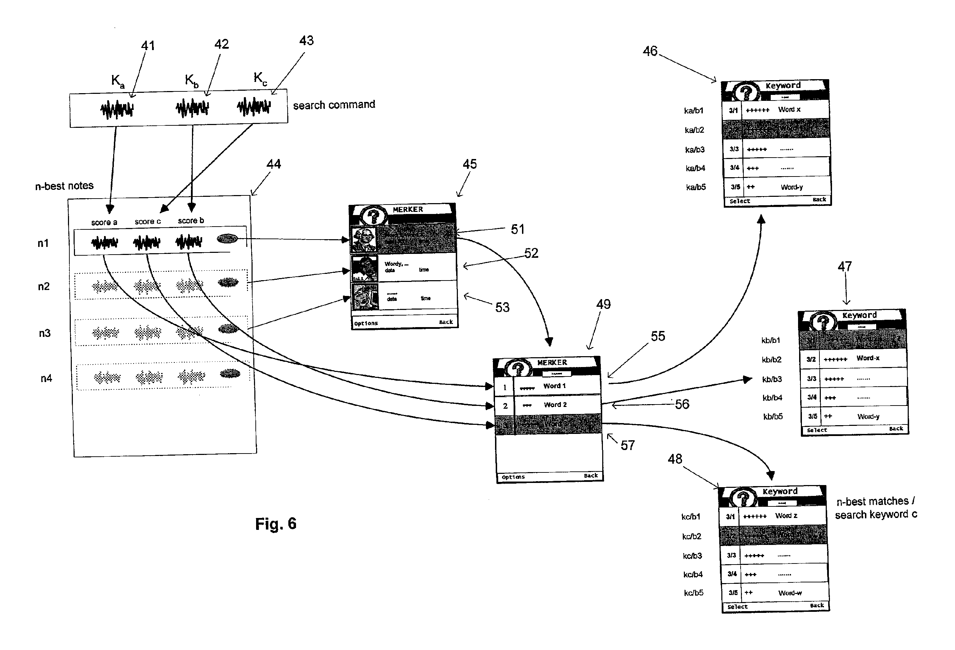

Fig. 6 veranschaulicht mögliche Interaktionen des Systems mit dem Benutzer bei einem Suchvorgang. Anhand dieses Ablaufes wird im Folgenden die Verwertung der Benutzerreaktionen dargelegt. Bei einem Suchvorgang spricht der Benutzer einige Suchstichworte, in Fig. 6 sind es drei: Kₐ 41, K_{b} 42 und K_{c} 43. Das System durchsucht daraufhin die abgespeicherten Stichworte und erstellt intern eine Liste 44 mit den n besten Fundstellen. Die Güte einer Fundstelle ergibt sich in der Regel aus einer Funktion aus den Abstandswerten der einzelnen Suchmuster zu den Fundstellen. Das Display 45 zeigt zuerst die drei besten Fundstellen 51, 52, 53. In dem Beispiel enthalten alle drei Fundstellen ein Bild, welches als im Thumbnail-Format angezeigt wird. Die Felder der Fundstellen enthalten ferner Datum und Uhrzeit des Anlegens des Datensatzes. Außerdem werden weitere mit dem Datensatz oder den Stichworten verbundene Informationen, z. B. Texte, soweit möglich in dem betreffenden Feld dargestellt. Der Benutzer kann mittels Select-Taste die Fundstelle auswählen. Dann werden ihm (hier nicht dargestellt) die mit der Fundstelle abgespeicherten Informationen großformatiger dargestellt und zugehörige Sprachnotizen ausgegeben. Die Auswahl der Fundstelle zeigt dem System an, dass, mit einiger Wahrscheinlichkeit, die gesuchte Stelle gefunden ist, d. h. der Benutzer bestätigt, dass die Suchmuster mit den Fundstellen übereinstimmen. Das System speichert die Suchmuster zusammen mit den Zeigern auf die gefundenen Stichworte zur späteren Verwertung (in Lernalgorithmen, Cluster-Algorithmen, usw.). Da die Fundstelle aber (wenn, wie in dem Beispiel, mehrere Suchworte vorgesprochen wurden) mithilfe mehrerer Suchmuster gefunden wurde, besteht die Möglichkeit, dass einzelne Zuordnungen von einem Suchwort zu einem abgespeicherten Stichwort falsch sind. Bei der Abspeicherung wird deshalb ein "Konfidenzwert" mitabgespeichert. Dieser ist im einfachsten Fall als 1/n, wobei n die Anzahl der verwendeten Suchworte ist. Einen besseren "Konfidenzwert" kann z. B. dadurch gebildet werden, dass die Abstandswerte eines jeden Suchwortes zu dem ihm beim Suchen zugeordneten Stichwort in die Berechnung einbezogen wird.
Anstelle der direkten Auswahl einer Fundstelle in 45 kann der Benutzer über Menü (Options) oder Navigationstasten eine Darstellung 49 mit den einzelnen Suchmustern 55, 56, 57 auswählen. In dieser Darstellung wird die Distanz von Suchmuster zu gefundenen Muster als einem Balken aus ,+' Zeichen dargestellt ( je mehr `+' Zeichen, umso kleiner der Abstandswert). Der Benutzer kann ein Feld wählen und die Select-Taste betätigen. Dann werden das Suchmuster und das bei der Suche zugeordnete Stichwort akustisch wiedergegeben. Der Benutzer kann die Zuordnung als richtig bestätigen, oder die n-best Liste 46, 47, 48 für das jeweilige Suchwort anzeigen lassen. Wenn er die Zuordnung bestätigt, wird das Suchwort mit einem Zeiger auf das betreffenden Stichwort zusammen mit einem `großen' "Konfidenzwert" gespeichert.
Wenn er die n-best Liste 46, 47, 48 für ein Suchwort auswählt, zeigt diese Liste die n besten Übereinstimmung von Stichworten mit Suchworten. Die Reihenfolge der Fundstellen muss nicht mit der Reihenfolge in der Liste 44 übereinstimmen. Die Reihefolge in der Liste 44 entstand durch (eventuell gewichtete) Wertung der Abstandswerte aller Suchworte. Der Benutzer kann mit den Navigationstasten die einzelnen Felder in 46, 47 oder 48 auswählen. Beim Auswählen eines Feldes, werden Suchstichwort und das entsprechende Stichwort akustisch ausgegeben. Der Benutzer kann die Zuordnung als richtig bestätigen, zum nächsten Feld gehen, oder das Verfahren abbrechen (Back-Taste). Wenn er die Zuordnung bestätigt, wird das Suchmuster mit einem `großen' "Konfidenzwert" abgespeichert. Diese Aufzeichnungen werden, bei späteren Suchvorgängen, oder in Algorithmen zur Cluster-Bildung, zur Anlegung von Index-Dateien, oder allgemein zur Verbesserung der Vorverarbeitungs-, Parameterextraktions-, Distanzbestimmungs-, und/oder Klassifizierungsmechanismen verwendet. Außerdem markiert der Benutzer diese Zuordnung für diesen Suchvorgang als feststehend. In der Folge werden dann, beim Weitersuchen, nur Datensätze (Notizen) berücksichtigt, welche ein Stichwort enthalten, welches zum gleichen Cluster gehört. Neben den 'positiven' Bewertungen, d. h. der Bestätigung der Zuordnung, kann auch die `negative' Bewertung, d. h. das Weitergehen zum nächsten Feld, oder der Abbruch des Vorganges gespeichert und in den oben erwähnten Verfahren und Algorithmen verwendet werden.

### Bezugszeichenliste

- 10: Handy
- 11: Digital Signal Prozessor DSP
- 12: Speicherkarte
- 13: Sprach-/Datenübertragung
- 14: Server/PC
- 15: Speichermedium/Plattenlaufwerk

- 20: Display
- 21,22, 23, 24: Bedienelemente
- 25: Menü
- 26: Element des Menüs

- 28, 29: Textfeld
- 30: Fenster des Menüs zu Wiedergabe von Piktogrammen, Bildern, usw.
- 31: Balken zur Darstellung des Ähnlichkeitsgrades eines Referenzwortes
- 33, 34: Darstellung aufgezeichneter akustischer Signale
- 35: schematisch dargestellte Tonbandspule
- 36: Linie zur Darstellung von Sprachpausen
- 38: schematisch dargestelltes Band
- 39: schematisch dargestellter Aufnahmekopf
- 40: Zeiger auf ein ausgewähltes Referenzwort
- 41, 42, 43: Suchstichworte
- 44: Liste von Fundstellen
- 45: Liste der besten Fundstellen
- 46, 47, 48: n-best Liste eines Suchworts
- 49: Darstellung einzelner Suchmuster
- 51, 52, 53: einzelne Fundstellen
- 55, 56, 57: Suchmuster
- 60, 61, 62, 63, 64, 65: Folge von Display-Anzeigen
- 66: Symbol für das Betätigen der Taste "Select"
- 67: Symbol für das Betätigen der Soft-Taste "Record"
- 68: Fenster
- 69: "Progress-bar"
- 71: markiertes Feld
- 72: Fenster
- 73: Feld zum Anzeigen vorgesprochener Stichworte
- 80, 81: Benutzeroberfläche
- 82: Wiedergabe-Symbol
- 83: Stop-Symbol
- 84: Aufnahme-Symbol
- 85: Symbol für schnellen Rücklauf
- 86: Symbol für schnellen Vorlauf
- 87: Balken
- 92: Bedienelement "Stichwort wiedergeben"
- 93: Bedienelement "Stichwort aufnehmen"
- 94: Bedienelement "Springe zum vorherigen Stichwort"
- 95: Bedienelement "Springe zum nächsten Stichwort"
- 96: "Flagge" zum Anzeigen der Position eines Stichwortes

## Patentansprüche

1. Verfahren zur sprachbasierten Nutzung von Speichersystemen, wobei das Verfahren Ein- und -ausgabemittel für Daten und/oder Signale, Mittel zur Aufzeichnung und/oder Wiedergabe von Daten und/oder Signalen und Mittel zur Daten- und/oder Signalverarbeitung verwendet,
**dadurch gekennzeichnet, daß**
in dem (den) Speichersystem(en) abgelegte Daten gespeicherte Sprachsignale (Stichworte) umfassen und/oder mit mindestens einem gespeicherten Stichwort verknüpft werden, und ein Zugriff auf in dem (den) Speichersystem(en) abgelegte Daten derart erfolgt, daß
- über Eingabemittel für Daten und/oder Signale einem Mittel zur Daten- und/oder Signalverarbeitung zugeführte Sprachsignale (Suchanfrage) automatisch mit wenigstens einem Teil der Stichworte verglichen und bewertet wird,
- in Abhängigkeit von der Bewertung eines Stichwortes dieses Stichwort enthaltende, in dem (den) Speichersystem(en) abgelegte Daten oder mit diesem Stichwort verknüpfte, in dem (den) Speichersystem(en) abgelegte Daten ausgegeben und/oder verfügbar gemacht und/oder durch diese Daten gesteuerte Prozesse gestartet werden.

2. Verfahren nach Anspruch 1,
**dadurch gekennzeichnet, daß**
die Verknüpfung der gespeicherten Stichworte mit den in dem (den) Speichersystem(en) abgelegten Daten durch Zeiger (pointer) realisiert wird, welche von dem Stichwort auf in dem (den) Speichersystem(en) abgelegte Daten verweisen.

3. Verfahren nach einem der Ansprüche 1 oder 2,
**dadurch gekennzeichnet, daß**
der Vergleich und/oder Bewertung auf einem Mittel zur Daten- und/oder Signalverarbeitung umfassenden Speicherelement, wie beispielsweise einem Flash-Speicherelement, ausgeführt wird.

4. Verfahren nach Anspruch 3,
**dadurch gekennzeichnet, daß**
auf dem Speicherelement ein Zugangsschutz implementiert ist.

5. Verfahren nach einem der voranstehenden Ansprüche,
**dadurch gekennzeichnet, daß**
ein Vergleich von Sprachsignalen einer Suchanfrage mit wenigstens einem Teil der Stichworte mittels eines Verfahrens zur Mustererkennung erfolgt.

6. Verfahren nach Anspruch 5,
**dadurch gekennzeichnet, daß**
für einen Mustervergleich "Dynamische Programmierung" oder Markov-Modelle oder künstliche 'Neuronale Netze' oder Kombinationen dieser Verfahren verwendet werden.

7. Verfahren nach einem der voranstehenden Ansprüche,
**dadurch gekennzeichnet, daß**
ein Mustervergleich auf Basis
- der Cepstrum-Koeffizienten und/oder
- der Spektralenergieverteilung und/oder
- der LPC-Koeffizienten und/oder
- der PARCOR-Koeffizienten und/oder
- der LAR-Koeffizienten und/oder
- der LSP-Koeffizienten und/oder
- der LSF-Koeffizienten und/oder
- der Nulldurchgangsrate (zero crossing rate) und/oder
- anderer geeigneter Merkmalsparameter im Zeitund/oder Frequenzbereich und/oder
- der Mel- oder Bark-Transformation der vorgenannten Koeffizienten und/oder
- der zeitlichen Ableitungen der vorgenannten Koeffizienten und/oder ihrer Mel- oder Bark-Transformationen
in geglätteter oder ungeglätteter Form durchgeführt wird.

8. Verfahren nach einem der voranstehenden Ansprüche,
**dadurch gekennzeichnet, daß**
weitere Informationen wie Sprachmuster der in den Suchbefehlen enthaltenen Stichworte, wie Zeiger auf die gefundenen Sprachnotizen, wie berechnete Abstandswerte und wie Reaktionen und/oder Bewertungen des Benutzers gespeichert werden und/oder bei späteren Suchvorgängen die Sprachmuster der früheren Suchbefehle unter Berücksichtigung der aufgezeichneten Bewertungen und/oder Benutzerreaktionen und/oder Abstandswerten und/oder Zeiger durchsucht werden.

9. Verfahren nach einem der voranstehenden Ansprüche,
**dadurch gekennzeichnet, daß**
zusammen mit aufgezeichneten Stichworten automatisch Zeit und Ort einer Aufzeichnung oder weitere Daten wie Aufnahmegerät, Konfiguration/ Einstellungen des Aufnahmegerätes, Datenformat, Lichtverhältnisse gespeichert werden, und/oder
zur Angabe eines Ortes Daten aus einem satellitengestütztem Ortsbestimmungssystem wie GPS (Global Positioning System) oder Daten der netzbasierten Ortsbestimmung von Telekommunikationsdiensten verwendet werden.

10. Verfahren nach einem der voranstehenden Ansprüche,
**dadurch gekennzeichnet, daß**
Stichworte und/oder zusätzliche, bei einer Suche benutzte Informationen editierbar abgespeichert sind und das Editieren wenigstens das Hinzufügen und/oder Löschen von Stichworten und/oder zusätzlicher Informationen und/oder die Erzeugung neuer Kategorien und/ oder das Beheben von Fehlern in der Kategorisierung umfaßt.

11. Verfahren nach einem der voranstehenden Ansprüche,
**dadurch gekennzeichnet, daß**
die Fundstellen mit der höchsten Trefferwahrscheinlichkeit zuerst wiedergegeben werden, wobei die Trefferwahrscheinlichkeit anhand
- der Anzahl der gesuchten und/oder gefundenen Stichworte und/oder
- der je Stichwort berechneten Abstandswerte ("Ähnlichkeit") und/oder
- der zeitlichen Reihenfolge der Aufzeichnung der Fundstellen (most recent first) und/oder
- der Häufigkeit der Abfrage der Fundstellen (Beliebtheitsgrad) und/oder
- anhand einer automatischen Rückfrage ermittelt wird.

12. Verfahren nach Anspruch 11,
**dadurch gekennzeichnet, daß**
die Rückfrage
- stichwortbasiert erfolgt und in den Fundstellen enthaltene oder mit den Fundstellen verknüpfte Stichworte zur Auswahl stellt und/oder
- auf Ortskoordinaten basiert und zur Eingrenzung der Fundstellen in den Fundstellen enthaltene oder mit den Fundstellen verknüpfte Orte vorschlägt und/oder
- auf Zeitangaben basiert und zur Eingrenzung der Fundstellen in den Fundstellen enthaltene oder mit den Fundstellen verknüpfte Zeitangaben vorschlägt, und/oder
die Rückfrage zur Eingrenzung der Fundstellen folgende Optionen anbietet:
- Rückfragekriterium wie Stichwort, Orts- und/ oder Zeitangabe ignorieren,
- Fundstellen, auf die das Rückfragekriterium verweist, verwerfen und/oder
- Fundstellen, auf die das Rückfragekriterium verweist, in nachfolgenden Verfahrensschritten weiterhin berücksichtigen.

13. Verfahren nach einem der voranstehenden Ansprüche,
**dadurch gekennzeichnet, daß**
die Sprachmuster beim Suchen mit den gleichen Datensätzen verglichen werden, welche auch zur Wiedergabe verwendet werden.

14. Verfahren nach einem der voranstehenden Ansprüche,
**dadurch gekennzeichnet, daß**
während des Aufzeichnens verdeckt gesucht und/oder während der Wiedergabe einer Fundstelle verdeckt weitergesucht wird.

15. Verfahren nach einem der voranstehenden Ansprüche,
**dadurch gekennzeichnet, daß**
die Suchalgorithmen und -parameter auf der Grundlage der aufgezeichneten Muster und Wertungen optimiert werden.

16. Verfahren nach einem der voranstehenden Ansprüche,
**dadurch gekennzeichnet, daß**
in Abhängigkeit der Bewertung und/oder der Ergebnisse des Vergleichs und/oder in Abhängigkeit von Benutzerreaktionen und/oder von Rückfragen Cluster gebildet werden, indem einem Stichwort wenigstens Teile von Suchanfragen und/oder Suchergebnissen zugeordnet werden,
und/oder Cluster von Artefakten gebildet werden,
und bei erneuter Suche zusammen mit einem Stichwort wenigstens ein Teil des diesem Stichwort zugeordneten Clusters verglichen und bewertet wird.

17. Verfahren nach einem der voranstehenden Ansprüche,
**dadurch gekennzeichnet, daß**
verschlüsselt gespeichert und ein Zugangsschutz installiert wird.

18. Verfahren nach einem der voranstehenden Ansprüche,
**dadurch gekennzeichnet, daß**
eine Kurzzeitspeicherung in einem Handy, eine Langzeitspeicherung auf einem Server vorgenommen werden, wobei periodisch und/oder bei Zugriff in den Langzeitspeicher überspielt wird oder Sprachaufzeichnungen auf verschiedenen Geräten gleichzeitig vorgenommen werden.

19. Verfahren nach einem der voranstehenden Ansprüche,
**dadurch gekennzeichnet, daß**
ein Index aufgebaut wird, indem einzelne Sprachmuster gesondert abgelegt und mit Zeigern auf in dem (den) Speichersystem(en) abgelegte Daten versehen werden oder Zeiger zusammen mit Übereinstimmungskoeffizienten (Scores) gespeichert werden und/oder Sprachmuster in den Index aufgenommen werden, welche ein Benutzer einzeln spricht.

20. Verfahren nach Anspruch 19,
**dadurch gekennzeichnet, daß**
die Erstellung der Indexdateien und die Optimierung der Indexdateien erfolgen, wenn das Handy an die Stromversorgung (Netz) angeschlossen ist, oder offline erfolgen, auf einem leistungsfähigerem Rechner.

21. Anordnung zur sprachbasierten Nutzung von Speichersystemen, welche Ein- und -ausgabemittel für Daten und/oder Signale, Mittel zur Aufzeichnung und/oder Wiedergabe von Daten und/oder Signalen und Mittel zur Daten- und/oder Signalverarbeitung umfaßt, **gekennzeichnet durch** mindestens einen Prozessor und/oder Chip, der (die) derart eingerichtet ist (sind), daß eine sprachbasierte Nutzung von digitalen Speichersystemen durchführbar ist, wobei in dem (den) Speichersystem(en) abgelegte Daten gespeicherte Sprachsignale (Stichworte) umfassen und/oder mit mindestens einem gespeicherten Stichwort verknüpft werden, und ein Zugriff auf in dem (den) Speichersystem(en) abgelegte Daten derart erfolgt, daß
- über Eingabemittel für Daten und/oder Signale einem Mittel zur Daten- und/oder Signalverarbeitung zugeführte Sprachsignale (Suchanfrage) automatisch mit wenigstens einem Teil der Stichworte verglichen und bewertet wird,
- in Abhängigkeit von der Bewertung eines Stichwortes dieses Stichwort enthaltende, in dem (den) Speichersystem(en) abgelegte Daten oder mit diesem Stichwort verknüpfte, in dem (den) Speichersystem(en) abgelegte Daten ausgegeben und/oder verfügbar gemacht und/oder **durch** diese Daten gesteuerte Prozesse gestartet werden.

22. Anordnung nach Anspruch 21,
**dadurch gekennzeichnet, dass**
ein Telekommunikationsendgerät wie ein Handy/ Telefon (10) mit einem Speichermedium wie FlashROM und/oder Speicherkarte (12) und/oder eine Datenverarbeitungseinrichtung wie PC, Server mit einer speziellen Zusatzsoftware (11) ausgestattet verwendet werden.

23. Anordnung nach einem der Ansprüche 21 oder 22,
**dadurch gekennzeichnet, dass**
eine spezielle Software auf einem Rechner (14) wie PC mit Spracheingabe und Sprachausgabe verwendet wird.

24. Anordnung nach einem der Ansprüche 21 bis 23,
**dadurch gekennzeichnet, dass**
ein Telefon über ein Netz an einen Rechner wie PC oder an einen speziellen Server angeschlossen verwendet wird.

25. Anordnung nach einem der Ansprüche 21 bis 24,
**dadurch gekennzeichnet, dass**
die Speicherkarte (12) zusätzlich zu dem Speicher für die Indexdateien und/oder die Sprachnotizen einen Suchprozessor und/oder Einrichtungen zum Zugangsschutz enthält.

26. Anordnung nach einem der Ansprüche 21 bis 25,
**dadurch gekennzeichnet, dass**
die Anordnung Mittel zum Anschluß an konventionelle Spracherkennungsmittel aufweist.

27. Computerprogramm, das es einem Computer ermöglicht, nachdem es in den Speicher des Computers geladen worden ist, ein Verfahren zur sprachbasierten Nutzung von Speichersystemen durchzuführen, wobei in dem (den) Speichersystem(en) abgelegte Daten gespeicherte Sprachsignale (Stichworte) umfassen und/oder mit mindestens einem gespeicherten Stichwort verknüpft werden, und
ein Zugriff auf in dem (den) Speichersystem(en) abgelegte Daten derart erfolgt, daß
- über Eingabemittel für Daten und/oder Signale einem Mittel zur Daten- und/oder Signalverarbeitung zugeführte Sprachsignale (Suchanfrage) automatisch mit wenigstens einem Teil der Stichworte verglichen und bewertet wird,
- in Abhängigkeit von der Bewertung eines Stichwortes dieses Stichwort enthaltende, in dem (den) Speichersystem(en) abgelegte Daten oder mit diesem Stichwort verknüpfte, in dem (den) Speichersystem(en) abgelegte Daten ausgegeben und/oder verfügbar gemacht und/oder durch diese Daten gesteuerte Prozesse gestartet werden.

28. Computerlesbares Speichermedium, auf dem ein Programm gespeichert ist, das es einem Computer ermöglicht, nachdem es in den Speicher des Computers geladen worden ist, ein Verfahren zur sprachbasierten Nutzung von Speichersystemen durchzuführen, wobei in dem (den) Speichersystem(en) abgelegte Daten gespeicherte Sprachsignale (Stichworte) umfassen und/oder mit mindestens einem gespeicherten Stichwort verknüpft werden, und
ein Zugriff auf in dem (den) Speichersystem(en) abgelegte Daten derart erfolgt, daß
- über Eingabemittel für Daten und/oder Signale einem Mittel zur Daten- und/oder Signalverarbeitung zugeführte Sprachsignale (Suchanfrage) automatisch mit wenigstens einem Teil der Stichworte verglichen und bewertet wird,
- in Abhängigkeit von der Bewertung eines Stichwortes dieses Stichwort enthaltende, in dem (den) Speichersystem(en) abgelegte Daten oder mit diesem Stichwort verknüpfte, in dem (den) Speichersystem(en) abgelegte Daten ausgegeben und/oder verfügbar gemacht und/oder durch diese Daten gesteuerte Prozesse gestartet werden.

29. Indexdateien wie Tabellen oder Cluster oder Verzeichnisse von Verweisen, Zeigern, Links, Bookmarks, Inhaltsverzeichnissen o. ä., welche durch ein Verfahren gemäß einem der Ansprüche 1 bis 20 erzeugt wurden.

30. Verfahren, bei dem ein Computerprogramm nach Anspruch 27 aus einem Netz zur Datenübertragung wie beispielsweise aus dem Internet auf eine an das Netz angeschlossene Datenverarbeitungseinrichtung heruntergeladen wird.
